(19) Europäisches Patentamt / European Patent Office / Office européen des brevets

(11) **EP 3 356 192 B1**

(12) **EUROPÄISCHE PATENTSCHRIFT**

(45) Veröffentlichungstag und Bekanntmachung des Hinweises auf die Patenterteilung:
**10.07.2019  Patentblatt 2019/28**

(21) Anmeldenummer: **16763011.0**

(22) Anmeldetag: **06.09.2016**

(51) Int Cl.:
**B60T 13/68** *(2006.01)*

(86) Internationale Anmeldenummer:
**PCT/EP2016/070909**

(87) Internationale Veröffentlichungsnummer:
**WO 2017/055015 (06.04.2017 Gazette 2017/14)**

(54) **ELEKTRO-PNEUMATISCHE PARKBREMSEINRICHTUNG EINES FAHRZEUGS MIT WEITEREM STEUERKREIS**

ELECTROPNEUMATIC PARKING BRAKE OF A VEHICLE WITH FURTHER CONTROLSYSTEM

FREIN DE STATIONNEMENT ÉLECTROPNEUMATIQUE D'UN VEHICULE AVEC AUTRE SYSTÈME DE CONTRÔLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2015   DE 102015116317**

(43) Veröffentlichungstag der Anmeldung:
**08.08.2018   Patentblatt 2018/32**

(73) Patentinhaber: **KNORR-BREMSE Systeme für Nutzfahrzeuge GmbH 80809 München (DE)**

(72) Erfinder: **HERGES, Michael 80935 München (DE)**

(56) Entgegenhaltungen:
**WO-A2-03/097423        DE-A1-102011 101 438
DE-A1-102013 107 503    DE-B4-102006 055 570
DE-B4-102007 061 908**

EP 3 356 192 B1

**Beschreibung**

Die Erfindung geht aus von einer elektro-pneumatischen Parkbremseinrichtung eines Fahrzeugs, insbesondere eines Zugfahrzeugs einer Zugfahrzeug-Anhängerkombination gemäß dem Oberbegriff von Anspruch 1.

Bei Lastkraftwagen, Nutzfahrzeugen und Zugfahrzeugen von Zugfahrzeug-Anhängerkombinationen sind elektro-pneumatische Parkbremseinrichtungen bekannt, welche durch einen elektrischen Feststellbremsgeber gesteuert werden. Die Parkbremsaktuatoren sind in Form von Federspeicherbremszylindern vorhanden, bei welchen zum Lösen ("Fahren") eine Bremskammer belüftet und dadurch über einen Federspeicherbremskolben wenigstens eine Speicherfeder gespannt gehalten wird, während zum Zuspannen der Parkbremse ("Parken") die Bremskammer entlüftet wird, so dass der Federspeicherbremskolben unter Wirkung der Speicherfeder eine Bremskraft erzeugt.

Eine gattungsgemäße elektro-pneumatische Parkbremseinrichtung ist aus DE 10 2006 024 120 A1 bekannt. Dort ist neben einem ersten elektro-pneumatischen Parkbremskreis ein zweiter elektro-pneumatischer Parkbremskreis mit einem 3/2-Wege-Magnetventil vorgesehen, wobei die beiden Parkbremskreise an Eingänge eines Wechselventils angeschlossen sind, welches an seinen mit den Federspeicherbremszylindern angeschlossenen Ausgang den größeren der an seinen Eingängen anstehenden Drücke weiter steuert. Wenn dann bei einem Schalten des ersten elektro-pneumatischen Parkbremskreises vom Zustand "Parken" in den Zustand "Fahren" durch einen Drucksensor ein Defekt im ersten Parkbremskreis detektiert wird, so wird der zweite Parkbremskreis zum Notlösen der Federspeicherbremsen aktiviert. Andererseits können auch bei defektem erstem Parkbremskreis die Federspeicherbremszylinder auch mittels des zweiten Parkbremskreises zugespannt werden.

Der vorliegenden Erfindung liegt die Aufgabe zugrunde, eine elektro-pneumatische Parkbremseinrichtung derart weiter zu entwickeln, dass einerseits auch bei Störungen noch eine zuverlässige Funktion der Parkbremse erhalten bleibt und andererseits ein kurzzeitiges Anhalten des Fahrzeugs mit geringem Luftverbrauch möglich ist.

Diese Aufgabe wird erfindungsgemäß durch die Merkmale von Anspruch 1 gelöst.

Offenbarung der Erfindung

Die Erfindung geht zunächst davon aus, dass die elektro-pneumatische Parkbremssteuereinrichtung bistabil ausgebildet ist und wenigstens den Zustand "Fahren" und den Zustand "Parken" als stabile Zustände aufweist. Die Zustände "Parken" und "Fahren" bzw. die entsprechenden Ventilstellungen von Ventilen der elektropneumatischen Parkbremssteuereinrichtung sind stabil, d.h. sie bleiben ohne Einwirkung einer Person oder unabhängig von elektrischer Energie bestehen. Folglich hat auch eine Entstromung der elektro-pneumatischen Parkbremssteuereinrichtung z.B. aufgrund eines Stromausfalls oder einer Störung der elektronischen Steuereinrichtung keinen Einfluss auf den jeweils eingestellten stabilen Zustand.

Beim Stand der Technik wird die Bistabilität entweder rein pneumatisch mit nachgeschalteten Relaisventilen und mehreren Betätigungs- und Regelkolben beispielsweise nach DE 10 2011 101 438 A1, DE 10 2009 016 983 A1 oder DE 10 247 812 C1 erzielt, oder über bistabile Magnetventile mit nachgeschaltetem Relaisventil sichergestellt, wie in DE10 2006 055 570 B4 beschrieben wird. Weiterhin ist aus DE 10 2007 061 908 B4 bekannt, die Bistabilität durch ein rückgekoppeltes Relaisventil zu realisieren, wobei die Rückkopplung durch ein erstes 3/2-Magnetventil realisiert wird, das unbestromt den Ausgang des Relaisventils mit dessen Steuerkammer verbindet und bestromt die Steuerkammer des Relaisventils von dessen Ausgang trennt und statt dessen mit dem Ausgang eines zweiten 3/2-Magnetventils verbindet, dass diesen Ausgang entweder mit Vorrat oder mit Atmosphäre verbinden kann. Die elektropneumatische Parkbremssteuereinrichtung gemäß der Erfindung soll nach irgendeiner der möglichen Arten von Bistabilität bistabil ausgebildet sein.

Eine elektro-pneumatische Parkbremssteuereinrichtung besitzt daher mindestens zwei stabile Zustände, die sie bei Abschalten oder Ausfall der elektrischen Versorgungsspannung einnehmen, bzw. halten kann. Es sind dies der Zustand "Fahren", in welchem die Federspeicherbremszylinder belüftet und daher gelöst sind und der Zustand "Parken", in dem die Federspeicherbremszylinder entlüftet und damit zugespannt sind. Während der Fahrt muss die Parkbremse auch im Fall eines Fehlers in der elektrischen Energieversorgung gelöst bleiben, da sonst die Hinterachse blockieren könnte, was die Verkehrssicherheit gefährdet. Deshalb wird die elektro-pneumatische Parkbremssteuereinrichtung vor Antritt der Fahrt in den stabilen Zustand "Fahren" geschaltet. Zum Zuspannen der Parkbremse im Stillstand wird dann in den Zustand "Parken" geschaltet. Danach kann die elektrische Energieversorgung der elektro-pneumatischen Parkbremssteuereinrichtung ausgeschaltet werden. Es können sich jedoch folgende problematische Situationen ergeben: Wenn die pneumatische Verbindung zwischen elektro-pneumatischer Parkbremssteuereinrichtung und den Federspeicherzylindern unterbrochen wird, z.B. durch ein Leck in der Verrohrung, so fällt der Druck ab und die Federspeicherbremszylinder würden zuspannen und könnten auch nicht mehr gelöst werden.

Weiterhin sollten, um den Luftverbrauch niedrig zu halten und die Radbremsen nicht unnötig zu belasten, nicht jedes Mal, wenn das Fahrzeug zum Stillstand kommt, z.B. in einem Verkehrsstau, die Federspeicherbremszylinder entlüftet werden.

Nicht zuletzt wenn die elektrische Energieversorgung abgeschaltet wird oder die elektrische Energieversorgung ausgefallen ist bevor die Parkbremsen zugespannt worden sind, das heißt wenn die elektro-pneumatische Parkbremssteuereinrichtung sich noch im stabilen Zustand "Fahren" befindet, so stünde keine Möglichkeit mehr zur Verfügung, die Parkbremse zuzuspannen.

Um diese Probleme zu lösen, weist die Erfindung zusätzlich noch die weiteren, im Folgenden beschriebenen Merkmale auf.

Weiterhin ist erfindungsgemäß eine Sensoreinrichtung vorgesehen, welche den Bewegungszustand des Fahrzeugs und den gerade vorliegenden stabilen Zustand der elektro-pneumatischen Parkbremssteuereinrichtung erfasst und ein den gerade vorliegenden Bewegungszustand des Fahrzeugs repräsentierendes Bewegungssignal und ein den gerade vorliegenden stabilen Zustand der elektro-pneumatischen Parkbremssteuereinrichtung repräsentierendes Zustandssignal in die elektronische Steuereinrichtung einsteuert, wobei die elektronische Steuereinrichtung weiterhin derart ausgebildet ist, dass sie wenigstens die folgenden Schritte ausführt:

j) Auswerten des Bewegungssignals dahingehend, ob das Fahrzeug sich im Stillstand oder annähernd im Stillstand befindet oder ob es fährt, und falls

k1) das Fahrzeug sich im Stillstand oder annähernd im Stillstand befindet Auswerten des Zustandssignals und falls

k12) der stabile Zustand "Parken" vorliegt Beenden des Verfahrens, falls aber

k22) nicht der stabile Zustand "Parken" vorliegt Steuern der elektropneumatischen Parkbremssteuereinrichtung in den stabilen Zustand "Parken" und Bestromen des wenigstens einen elektromagnetischen Ventils,

oder falls

k2) das Fahrzeug fährt Auswerten des Zustandssignals und falls

k21) nicht der stabile Zustand "Parken" vorliegt Fortfahren mit Schritt j), aber falls

k22) der stabile Zustand "Parken" vorliegt Erfassen, ob das wenigstens eine elektromagnetische Ventil bestromt ist, und falls das wenigstens eine elektromagnetische Ventil bestromt ist, Steuern der elektro-pneumatischen Parkbremssteuereinrichtung in den stabilen Zustand "Fahren".

Dann wird die elektro-pneumatische Parkbremssteuereinrichtung bei jedem Stillstand oder annäherndem Stillstand des Fahrzeugs automatisch in den stabilen Zustand "Parken" geschaltet bzw. gestellt und gleichzeitig das wenigstens eine elektromagnetischen Ventil der Ventileinrichtung bestromt (siehe obige Schritte i1, i22). Da nun an den beiden Eingängen des Wechselventils Vorratsdruck aus dem wenigstens einen Druckluftvorrat ansteht, bleiben die Federspeicherbremszylinder zunächst weiterhin belüftet und somit gelöst. Durch ein nachfolgendes Umschalten in den stabilen Zustand "Fahren" wird dann nur das geringe Luftvolumen innerhalb der elektro-pneumatischen Parkbremssteuereinrichtung, innerhalb der Leitungen bzw. Verrohrungen zu dem Wechselventil und innerhalb der Federspeicherbremszylinder entlüftet. Dadurch wird der Luftverbrauch reduziert.

Soll das Fahrzeug wieder anfahren, so wird die elektro-pneumatische Parkbremssteuereinrichtung mittels des Feststellbremssignalgebers in den stabilen Zustand "Fahren" geschaltet. Wenn dabei im Stillstand oder annäherndem Stillstand des Fahrzeugs jedoch die elektrische Energieversorgung der elektro-pneumatischen Parkbremssteuereinrichtung aus oder wird sie abgeschaltet, z.B. durch einen Batteriehauptschalter, so schaltet sich das wenigstens eine elektromagnetische Ventil unbestromt und federbelastet automatisch in seine Entlüftungsstellung, in welcher der zweite Arbeitsausgang mit der zweiten Entlüftung verbunden wird, so dass der zweite Eingang des Wechselventils entlüftet ist. Weil bereits vor Ausfall der elektrischen Energieversorgung auch der erste Arbeitsausgang der elektro-pneumatischen Parkbremssteuereinrichtung entlüftet war, wird der Ausgang des Wechselventils und damit auch die daran angeschlossenen Federspeicherbremszylinder entlüftet. Folglich verbleibt dann das Fahrzeug in dem stabilen und sicheren Zustand "Parken". Darüber hinaus wird auch eine eventuell aktivierte Testfunktion der elektro-pneumatischen Parkbremssteuereinrichtung, bei welcher getestet wird, ob das über die Federspeicherbremszylinder eingebremste Zugfahrzeug die Zugfahrzeug-Anhängerkombination mit ungebremstem Anhänger im Stillstand halten kann, ohne elektrische Energieversorgung automatisch deaktiviert.

Tritt andererseits im Zustand "Fahren" ein Leck in der Druckverbindung zwischen dem ersten Arbeitsausgang der elektro-pneumatischen Parkbremssteuereinrichtung und dem ersten Eingang des Wechselventils auf, so ist der erste Eingang des Wechselventils entlüftet. Dann sorgt das bestromte und damit in seiner Belüftungsstellung befindliche wenigstens eine elektromagnetische Ventil der Ventileinrichtung dafür, dass der zweite Eingang des Wechselventils und damit auch dessen Ausgang belüftet bleibt. Infolgedessen wird zuverlässig verhindert, dass die Federspeicherbremszylinder während der Fahrt aufgrund eines solchen Lecks unbeabsichtigt zuspannen.

Insgesamt ergibt sich folglich eine sehr zuverlässige und sichere Steuerung der Parkbremse.

Durch die in den Unteransprüchen aufgeführten Maßnahmen sind vorteilhafte Weiterbildungen und Verbesserungen der in den unabhängigen Ansprüchen angegebenen Erfindung möglich.

Die elektro-pneumatische Parkbremssteuereinrichtung, welche hier bevorzugt zur Steuerung der Parkbremseinrichtung verwendet wird, weist einen Anschluss für wenigstens einen Federspeicherbremszylinder, eine mittels der elektronischen Steuereinrichtung steuerbare erste Magnetventileinrichtung, ein Relaisventil, dessen pneumatischer Steuereingang einerseits mit der ersten Magnetventileinrichtung und andererseits mit dessen Arbeitsausgang und mit dem Anschluss für den wenigstens einen Federspeicherbremszylinder verbunden ist, einen Vorratsanschluss für wenigstens einen Druckluftvorrat, welcher einerseits mit der ersten Magnetventileinrichtung und andererseits mit einem Vorratseingang des Relaisventils verbunden ist, eine Rückkopplungsleitung, durch welche der Arbeitsausgang und der pneumatische Steuereingang des Relaisventils miteinander verbindbar sind, auf. Damit ist hier beispielsweise ein rückgekoppeltes Relaisventil zur Realisierung der Bistabilität der elektro-pneumatischen Parkbremssteuereinrichtung verwirklicht.

Dabei wird bevorzugt die erste Magnetventileinrichtung durch zwei 2/2-Wegemagnetventile mit jeweils einer Sperrstellung und einer Durchlassstellung gebildet wird, wobei ein erstes 2/2-Wegemagnetventil als Einlassventil zwischen den Steuereingang des Relaisventils und den Vorratsanschluss und ein zweites 2/2-Wegemagnetventil zwischen den Steuereingang des Relaisventils und eine Drucksenke geschaltet ist. Weiterhin ist in der Rückkopplungsleitung wenigstens ein Drosselelement angeordnet, derart, dass der Arbeitsausgang und der pneumatische Steuereingang des Relaisventils miteinander stets in Strömungsverbindung stehen.

Gemäß einer bevorzugten Ausführungsform ist der zweite Vorratsanschluss der Ventileinrichtung mit einem ersten Druckluftvorrat verbunden ist, mit welchem auch der erste Vorratsanschluss der elektro-pneumatischen Parkbremssteuereinrichtung verbunden ist oder mit einem in Bezug zum ersten Druckluftvorrat separaten zweiten Druckluftvorrat. Die zweite Alternative bringt den Vorteil, dass bei einem Leck insbesondere in der Druckluftversorgung der elektro-pneumatischen Parkbremssteuereinrichtung durch den ersten Druckluftvorrat weiterhin eine Druckluftversorgung der Ventileinrichtung durch den zweiten Druckluftvorrat sichergestellt ist, durch welche dann die Parkbremse unabhängig gelöst und zugespannt werden kann. Mit anderen Worten wird die Ventileinrichtung bevorzugt aus einem anderen Druckluftvorrat mit Druckluft versorgt als die elektropneumatische Parkbremssteuereinrichtung. Dann kann durch Bestromung des wenigstens einen elektromagnetischen Ventils der Ventileinrichtung auch bei einem Ausfall der Druckluftversorgung der elektro-pneumatischen Parkbremssteuereinrichtung durch den ersten Druckluftvorrat oder bei Bruch der Verrohrung zwischen der elektropneumatischem Parkbremssteuereinrichtung und den Federspeicherbremszylindern ein unbeabsichtigtes Zuspannen der Federspeicherbremszylinder während der Fahrt und damit eine Beeinträchtigung der Verkehrssicherheit verhindert werden. Es wäre aber auch in einem solchen Fehlerfall möglich, bereits zugespannte Federspeicherbremszylinder "notzulösen", um das eingebremste Fahrzeug von einer Gefahrenstelle, z.B. einem Bahnübergang, weg zu bewegen.

Bevorzugt wird das elektromagnetische Ventil der Ventileinrichtung durch ein 3/2-Wege-Magnetventil gebildet, an welchem der zweite Vorratsanschluss, die zweite Entlüftung und der zweite Arbeitsausgang ausgebildet sind und welches stromlos bedingt durch Federvorspannung den zweiten Arbeitsausgang mit der zweiten Entlüftung und bestromt gegen die Wirkung der Federvorspannung den zweiten Arbeitsausgang mit dem zweiten Vorratsanschluss verbindet. Unbestromt nimmt das 3/2-Wege-Magnetventil daher eine Entlüftungsstellung ein, in welcher die zweite Entlüftung mit dem zweiten Arbeitsanschluss verbunden ist und bestromt eine Belüftungsstellung in welcher der zweite Arbeitsanschluss mit dem zweiten Vorratsanschluss verbunden ist.

Gemäß einer Weiterbildung wird das 3/2-Wege-Magnetventil durch ein Ventil gebildet, welches in einer Antriebsschlupfregelung (ASR) einer elektro-pneumatischen Betriebsbremse verwendet wird und daher auch als ASR-Ventil bezeichnet werden kann. Dadurch wird ein in hoher Stückzahl gefertigtes Ventil verwendet, wodurch sich niedrige Kosten ergeben.

Bevorzugt wird das elektromagnetische Ventil pulsweitenmoduliert oder mehrstufig pulsweitenmoduliert gesteuert, um eine Überhitzung zu vermeiden.

Besonders bevorzugt ist in einer Druckverbindung zwischen dem zweiten Arbeitsausgang der Ventileinrichtung und dem zweiten Eingang des Wechselventils und/oder in einer Druckverbindung zwischen dem Ausgang des Wechselventils und dem wenigstens einen Federspeicherbremszylinder wenigstens ein Drucksensor angeordnet, dessen Drucksignale in der elektronischen Steuereinrichtung ausgewertet werden. Damit wird der von der Ventileinrichtung ausgesteuerte bzw. in den Federspeicherbremszylindern herrschende Druck gemessen. Bei einem in der Druckverbindung zwischen dem Wechselventil und dem oder den zugeordneten Federspeicherbremszylindern angeordneten Drucksensor kann dann je nach Schaltstellung der Ventileinrichtung und der elektro-pneumatischen Parkbremssteuereinrichtung Fehler in Druckverbindungen, Verrohrungen und/oder im Druckluftvorrat direkt erkannt werden. Dabei kann sogar ein in der elektro-pneumatischen Parkbremssteuereinrichtung angeordneter Drucksensor entfallen, da je nach Schaltposition der Ventileinrichtung der von der elektropneumatischen Parkbremssteuereinrichtung oder der von der bestromten Ventileinrichtung gelieferte Druck erfasst wird. Wenn weiterhin an mindestens zwei Federspeicherbremszylindern Drucksensoren angebracht werden, dann können anhand einer Plausibilisierung durch Vergleich der Sensorsignale Defekte erkannt werden.

Bevorzugt empfängt die elektronische Steuereinrichtung Steuersignale wenigstens eines Feststellbremssignalgebers und stellt dann abhängig von diesen Steuersignalen wenigstens die stabilen Zustände "Fahren" und "Parken" der elektro-pneumatischen Parkbremssteuereinrichtung ein. Der Feststellbremssignalgeber kann eine manuell bedienbare Betätigungseinrichtung wie ein Hebel, ein Schalter, ein Kippschalter oder ein Drehhebel sein als auch eine weitere elektronische Steuereinrichtung etwa eines Fahrerassistenzsystems wie z.B. eines Hill-Holders oder einer Anfahrhilfe. Die weitere elektronische Steuereinrichtung eines solchen Fahrerassistenzsystems sendet dann Steuersignale in die elektronische Steuereinrichtung der elektro-pneumatischen Parkbremssteuereinrichtung, um beispielsweise bei einem detektierten Fahrzeugstillstand den stabilen Zustand "Parken" herzustellen.

Besonders bevorzugt können auch die elektro-pneumatische Parkbremssteuereinrichtung und/oder die elektronische Steuereinrichtung und/oder die Ventileinrichtung zusammen in einer Baueinheit integriert sein, welche dann ein Parkbremsmodul bildet.

Alternativ kann die Ventileinrichtung auch separat von der elektro-pneumatischen Parkbremssteuereinrichtung und in unmittelbarer Nähe des wenigstens einen Federspeicherbremszylinders angeordnet sein. Dies bringt den Vorteil einer kurzen pneumatischen Verrohrung zwischen der Ventileinrichtung und dem Wechselventil, welches ebenfalls bevorzugt in unmittelbarer Nähe des wenigstens einen Federspeicherbremszylinders angeordnet ist.

Die stabilen Zustände "Parken" und "Fahren" der elektro-pneumatischen Parkbremssteuereinrichtung werden gemäß einer Weiterbildung bevorzugt durch ein rückgekoppeltes Relaisventil und/oder durch ein bistabiles Magnetventil hergestellt.

Gemäß einer Weiterbildung weist die elektro-pneumatische Parkbremssteuereinrichtung eine von der elektronischen Steuereinrichtung gesteuerte Magnetventileinrichtung und einen mit dieser verbundenen Anschluss für ein Anhängersteuerventil auf, welcher mit einem pneumatischen Steuereingang eines Anhängersteuerventils oder eines Anhängersteuermoduls verbunden ist, welches ausgangsseitig mit einem Kupplungskopf "Vorrat" und einem Kupplungskopf "Bremse" verbunden ist.

Insbesondere steuert dabei die elektronische Steuereinrichtung das wenigstens eine elektromagnetische Ventil und/oder die Magnetventileinrichtung derart, dass der Anschluss für das Anhängersteuerventil im Zustand "Fahren" belüftet und im Zustand "Parken" belüftet oder entlüftet wird. Handelt es sich um ein Fahrzeug mit "Scandinavian Parkbrake", d.h. dass der Anhänger bei zugespannten Federspeicherbremsen des Zugfahrzeugs nicht gebremst wird, muss dazu keine Aktion ausgeführt werden. Bei einer "European Parkbrake", d.h. dass der Anhänger bei zugespannten Federspeicherbremsen des Zugfahrzeugs mit eingebremst wird, wird dann die "Testfunktion" aktiviert, mit welcher der Fahrer ansonsten testen kann, ob die Federspeicher des Zugfahrzeugs alleine die Zugfahrzeug-Anhängerkombination sicher eingebremst halten können.

Die Erfindung betrifft auch ein Zugfahrzeug einer Zugfahrzeug-Anhängerkombination, welches eine elektro-pneumatische Parkbremseinrichtung wie oben beschrieben aufweist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Genaueres geht aus der folgenden Beschreibung von Ausführungsbeispielen hervor.

Zeichnung

Nachstehend sind Ausführungsbeispiele der Erfindung in der Zeichnung dargestellt und in der nachfolgenden Beschreibung näher erläutert. In der Zeichnung zeigt

Fig.1     ein schematisches Schaltbild einer bevorzugten Ausführungsform einer elektro-pneumatischen Parkbremssteuereinrichtung;

Fig.2     das Schaltbild von Fig.1 in einem Zustand, in dem die Federspeicherbremse dosiert gelöst wird;

Fig.3     das Schaltbild von Fig.1 in einem Zustand, in dem die Federspeicherbremse dosiert zugespannt wird;

Fig.4    das Schaltbild von Fig.1 in einem Zustand, in dem die elektropneumatische Parkbremssteuereinrichtung in den Betriebszustand "Fahren" gebracht wird;

Fig.5    das Schaltbild von Fig.1 in einem Zustand, in dem sich die elektropneumatische Parkbremssteuereinrichtung im stabilen Betriebszustand "Fahren" befindet;

Fig.6    das Schaltbild von Fig.1 in einem Zustand, in dem die elektropneumatische Parkbremssteuereinrichtung in den Betriebszustand "Parken" gebracht wird;

Fig.7    das Schaltbild von Fig.1 in einem Zustand, in dem sich die elektropneumatische Parkbremssteuereinrichtung im stabilen Betriebszustand "Parken" befindet;

Fig.8    ein schematisches Schaltbild einer weiteren Ausführungsform einer elektro-pneumatischen Parkbremssteuereinrichtung mit einem Stufenkolben;

Fig.9    ein schematisches Schaltbild einer Weiterbildung der Ausführungsform von Fig.8 mit einer Entlüftungsdrossel;

Fig.10   ein schematisches Schaltbild einer weiteren Ausführungsform einer elektro-pneumatischen Parkbremssteuereinrichtung mit einer zusätzlichen Magnetventileinrichtung zur Realisierung einer Anhängeransteuerung mit Testfunktion;

Fig.11   ein schematisches Schaltbild einer Abwandlung der Ausführungsform von Fig.10;

Fig.12   ein schematisches Schaltbild einer weiteren Ausführungsform einer elektro-pneumatischen Parkbremssteuereinrichtung mit einer zusätzlichen Magnetventileinrichtung zum Ein- und Ausschalten der Anhängersteuerfunktionen;

Fig.13   ein schematisches Schaltbild einer Abwandlung der Ausführungsform von Fig.12;

Fig.14   ein schematisches Schaltbild einer weiteren Ausführungsform einer elektro-pneumatischen Parkbremssteuereinrichtung mit Notbetätigung über ein Handventil;

Fig.15   ein schematisches Schaltbild einer weiteren Ausführungsform einer elektro-pneumatischen Parkbremssteuereinrichtung mit Notbetätigung über ein elektrisch betätigtes Ventil;

Fig.16   ein schematisches Schaltbild einer weiteren Ausführungsform einer elektro-pneumatischen Parkbremssteuereinrichtung mit Notbetätigung über ein elektrisch betätigtes Ventil und Doppelschalter;

Fig.17   ein schematisches Schaltbild einer weiteren Ausführungsform einer elektro-pneumatischen Parkbremssteuereinrichtung mit Notbetätigungsventil;

Fig.18   ein schematisches Schaltbild einer weiteren Ausführungsform einer elektro-pneumatischen Parkbremssteuereinrichtung mit einem Drucksensor am Arbeitsausgang des Relaisventils;

Fig.19   ein schematisches Schaltbild einer weiteren Ausführungsform einer elektro-pneumatischen Parkbremssteuereinrichtung mit einem Drucksensor am Steuereingang des Relaisventils;

Fig.20   ein schematisches Schaltbild einer weiteren Ausführungsform einer elektro-pneumatischen Parkbremssteuereinrichtung mit zwei Drucksensoren;

Fig.21   ein schematisches Schaltbild einer weiteren Ausführungsform einer elektro-pneumatischen Parkbremssteuereinrichtung mit zwei Drucksensoren;

Fig.22   ein schematisches Schaltbild einer weiteren Ausführungsform einer elektro-pneumatischen Parkbremssteuereinrichtung mit zwei Drucksensoren;

Fig.23   ein schematisches Schaltbild einer weiteren Ausführungsform einer elektro-pneumatischen Parkbremssteuereinrichtung mit drei Drucksensoren;

Fig.24    ein schematisches Schaltbild einer weiteren Ausführungsform einer elektropneumatischen Parkbremssteuereinrichtung als Baueinheit;

Fig.25    ein schematisches Schaltbild einer weiteren Ausführungsform einer elektro-pneumatischen Parkbremssteuereinrichtung als Baueinheit mit externen Bauteilen;

Fig.26    ein schematisches Schaltbild einer weiteren Ausführungsform einer elektro-pneumatischen Parkbremssteuereinrichtung als Baueinheit mit externen Bauteilen;

Fig.27    ein schematisches Schaltbild einer weiteren Ausführungsform einer elektro-pneumatischen Parkbremssteuereinrichtung als Baueinheit mit externen Bauteilen;

Fig.28    ein schematisches Schaltbild einer weiteren Ausführungsform einer elektro-pneumatischen Parkbremssteuereinrichtung als Baueinheit mit weiteren integrierten Bauteilen;

Fig.29    ein schematisches Schaltbild einer weiteren Ausführungsform einer elektro-pneumatischen Parkbremssteuereinrichtung mit einer zusätzlichen Magnetventileinrichtung zur Realisierung einer Streckbremsfunktion;

Fig.30    ein schematisches Schaltbild einer weiteren Ausführungsform einer elektro-pneumatischen Parkbremssteuereinrichtung mit einer integrierten zusätzlichen Magnetventileinrichtung zur Realisierung einer Streckbremsfunktion.

Fig.31    ein schematisches Schaltbild einer bevorzugten Ausführungsform einer elektropneumatischen Parkbremseinrichtung gemäß der Erfindung mit einer elektro-pneumatischen Parkbremssteuereinrichtung gemäß einer der Figuren 1 bis 30;

Fig.32    ein schematisches Schaltbild einer weiteren Ausführungsform einer elektropneumatischen Parkbremseinrichtung gemäß der Erfindung mit einer elektro-pneumatischen Parkbremssteuereinrichtung gemäß einer der Figuren 1 bis 30;

Fig.33    ein schematisches Schaltbild einer weiteren Ausführungsform einer elektropneumatischen Parkbremseinrichtung gemäß der Erfindung mit einer elektro-pneumatischen Parkbremssteuereinrichtung gemäß einer der Figuren 1 bis 30;

Fig.34    ein schematisches Schaltbild einer weiteren Ausführungsform einer elektropneumatischen Parkbremseinrichtung gemäß der Erfindung mit einer elektro-pneumatischen Parkbremssteuereinrichtung gemäß einer der Figuren 1 bis 30;

Fig.35    ein schematisches Schaltbild einer weiteren Ausführungsform einer elektropneumatischen Parkbremseinrichtung gemäß der Erfindung mit einer elektro-pneumatischen Parkbremssteuereinrichtung gemäß einer der Figuren 1 bis 30;

Fig.36    einen Ablaufplan eines Verfahrens zur Steuerung einer elektropneumatischen Parkbremseinrichtung gemäß der Erfindung, welche eine elektro-pneumatische Parkbremssteuereinrichtung gemäß einer der Figuren 1 bis 30 aufweist.

Beschreibung der Ausführungsbeispiele

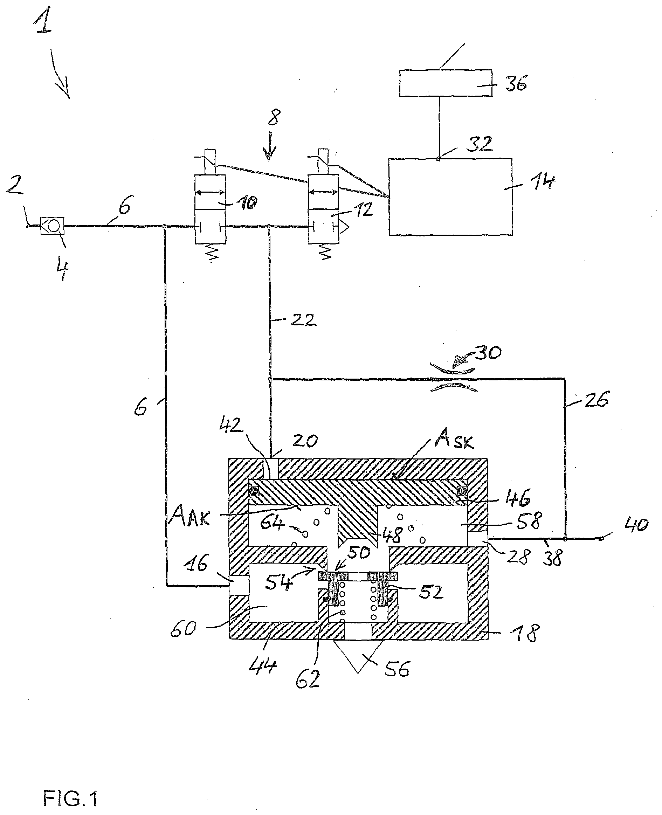

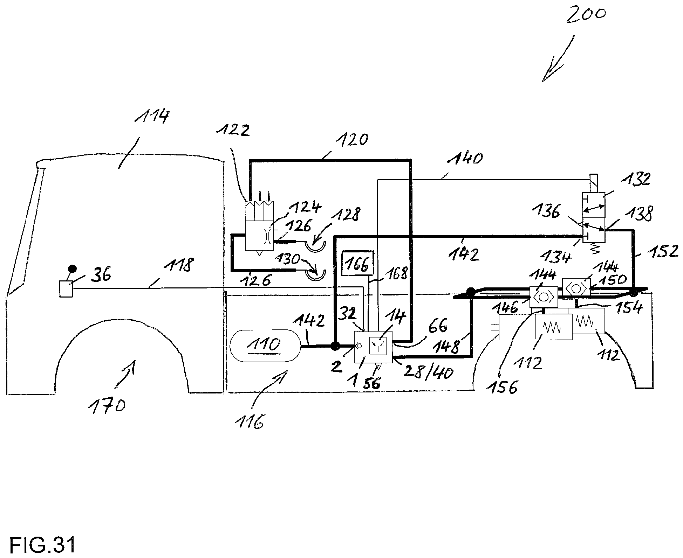

**Fig.1** zeigt ein schematisches Schaltbild einer bevorzugten Ausführungsform einer elektro-pneumatischen Parkbremssteuereinrichtung 1. Die elektropneumatische Parkbremssteuereinrichtung 1 stellt bevorzugt eine Komponente einer elektropneumatischen Parkbremseinrichtung 200 eines für den Anhängerbetrieb ausgestatteten Zugfahrzeugs 170 dar, wie sie in den Figuren 31 bis 35 dargestellt ist. Parallel dazu ist als Betriebsbremse beispielsweise eine elektronisch geregelte Bremsanlage (EBS) vorhanden.

Die elektro-pneumatische Parkbremssteuereinrichtung 1 hat einen ersten Vorratsanschluss 2, der über ein Rückschlagventil 4 abgesichert ist. Von dem ersten Vorratsanschluss 2 erstreckt sich eine Vorratsleitung 6 einerseits zu einer ersten Magnetventileinrichtung 8 mit einem ersten 2/2-Wegemagnetventil 10 als Einlassventil und einem zweiten 2/2-Wegemagnetventil 12 als Auslassventil. Das erste 2/2-Wegemagnetventil 10 befindet sich wie das zweite 2/2-Wegemagnetventil 12 unbestromt in der gezeigten Sperrstellung, während beide Ventile 10, 12 bestromt in die Durchlassstellung umschalten und von einer elektronischen Steuereinrichtung 14 gesteuert werden.

Weiterhin ist auch ein Vorratseingang 16 eines Relaisventils über die Vorratsleitung 6 an den Vorratsanschluss 2 angeschlossen. Ein pneumatischer Steuereingang 20 des Relaisventils 18 ist über eine Steuerleitung 22 mit der Kombination aus Einlassventil 10 (erstes 2/2-Wegemagnetventil) und Auslassventil 12 (zweites 2/2-Wegemagnetventil) verbunden.

Im Einzelnen ist in der stromlosen Sperrstellung des zweiten 2/2-Wegemagnetventils 12 die Verbindung zwischen der Steuerleitung 22 bzw. dem Steuereingang 20 des Relaisventils 18 und einer Drucksenke 24 unterbrochen, während diese Verbindung in der bestromten Durchlassstellung geschaltet ist. In analoger Weise ist in der stromlosen Sperrstellung des ersten 2/2-Wegemagnetventils 10 die Verbindung zwischen der Steuerleitung 22 bzw. dem Steuereingang 20 des Relaisventils 18 und dem ersten Vorratsanschluss 2 unterbrochen, während diese Verbindung in der bestromten Durchlassstellung geschaltet ist.

Darüber hinaus ist in eine Rückkopplungsleitung 26 zwischen einem ersten Arbeitsausgang 28 des Relaisventils 18 und dem Steuereingang 20 des Relaisventils 18 ein Drosselelement 30 geschaltet, durch welches der Strömungsquerschnitt der Rückkopplungsleitung 26 verengt und mittels der Strömungsquerschnittsverengung der Luftmassenstrom zwischen dem Arbeitsausgang und dem pneumatischen Steuereingang des Relaisventils begrenzt bzw. gedrosselt wird.

Die beiden 2/2-Wegemagnetventile 10, 12 sind bevorzugt in ihre stromlose Stellung federbelastet vorgespannt und werden durch Bestromung mittels der Steuereinrichtung 14 umgeschaltet.

Der erste Arbeitsausgang 28 des Relaisventils 18 ist mittels einer Arbeitsleitung 38 mit einem Anschluss 40 für wenigstens einen Federspeicherbremszylinder verbunden. An diesen Anschluss 40 sind bevorzugt zwei hier nicht gezeigte Federspeicherbremszylinder an der Hinterachse angeschlossen.

Die Steuerleitung 22 bzw. der Steuereingang 20 des Relaisventils 18 wird je nach Schaltstellung des ersten 2/2-Wegemagnetventils 10 und des zweiten 2/2-Wegemagnetventil 12 (Einlass-/Auslassmagnetventilkombination) be- oder entlüftet, so dass eine Be- oder Entlüftung durch Luftmengenverstärkung mittels des Relaisventils 18 eine entsprechende Be- oder Entlüftung des Arbeitsausgangs 28 und damit des Anschlusses 40 für den wenigstens einen Federspeicherbremszylinder nach sich zieht. Das Relaisventil 18 ist in weitgehend bekannter Weise aufgebaut und beinhaltet eine über den Steuereingang 20 an die Steuerleitung angeschlossene Steuerkammer 42, einen die Steuerkammer 42 begrenzenden, in einem Gehäuse 44 beweglichen Relaiskolben 46 mit einem an dem Relaiskolben 46 bzw. an dessen Relaisventilkolbenstange ausgebildeten Ventilkörper 48, der mit einem Auslasssitz 50 an einer ebenfalls im Gehäuse 44 beweglich aufgenommenen Manschette 52 ein Auslassventil eines Doppelsitzventils ausbildet. Weiterhin beinhaltet das Relaisventil 18 einen am Gehäuse 44 ausgebildeten Einlasssitz 54, gegen welchen die Manschette 52 vorgespannt und mit diesem zusammen ein Einlassventil des Doppelsitzventils bildet. Die Manschette 52 weist außerdem eine mittige Durchgangsbohrung auf, die bei von der Manschette 52 abgehobenem Relaiskolben 46 eine Entlüftung 56 mit einer Arbeitskammer 58 verbindet, die mit dem ersten Arbeitsausgang 28 verbunden ist, um diesen zu entlüften. Andererseits ist eine mit dem Vorratseingang 16 in Verbindung stehende Vorratskammer 60 bei von dem Einlasssitz 54 abgehobener Manschette 52 mit der Arbeitskammer 58 verbunden, um den ersten Arbeitsausgang 28 zu belüften. Die Stellung des Relaiskolbens 46, der mit seinem Ventilkörper 48 die Manschette 52 nach unten drücken kann, um ihn vom Einlasssitz 54 abzuheben wird demnach durch den Druck am Steuereingang 20 bzw. in der Steuerkammer 42 bestimmt. Schließlich wird die Manschette 52 mittels einer Manschettenfeder 62 gegen den Einlasssitz 54 gedrängt. Außerdem drängt eine Relaiskolbenfeder 64 mit der Kraft $F_F$ den Relaiskolben 46 vom Auslasssitz 50 weg in Richtung Steuerkammer 42.

Die Schaltzustände der beiden 2/2-Wegemagnetventile 10, 12 werden durch die Steuereinrichtung 14 bestimmt, insbesondere in Abhängigkeit von den an dem Feststellbremssignalanschluss 32 anstehenden Feststellbremssignalen. Hierzu ist der Feststellbremssignalgeber 36 ausgebildet, dass er betätigungsabhängig Feststellbremssignale aussteuert, welche die weiter unter beschriebenen Betriebszustände repräsentieren.

Die Steuereinrichtung kann über den Feststellbremssignalanschluss oder über einen weiteren Signalanschluss auch mit einem in den Figuren nicht dargestellten Fahrzeugdatenbus verbunden sein, über den digitale Daten von anderen Steuereinrichtungen empfangen und an diese gesendet werden können. Anstatt durch den oder zusätzlich zu dem durch den Fahrer manuell bedienbaren Feststellbremssignalgeber 36 können Feststellbremssignale auch von einer weiteren Steuereinrichtung beispielsweise über einen Fahrzeugdatenbus in die Steuereinrichtung 14 eingesteuert werden, beispielsweise von einem Fahrerassistenzsystem wie beispielsweise von einem Anfahrhilfesystem an Steigungen. Anhand von über einen solchen Fahrzeugdatenbus empfangenen Signalen können Feststellbremssignale dann von der Steuereinrichtung 14 selbst generiert werden. Beispielsweise kann die Parkbremse automatisch zugespannt werden, wenn das Fahrzeug 170 zum Stillstand gekommen ist, oder auch automatisch gelöst werden, wenn erkannt wird, dass das Fahrzeug 170 losfahren soll.

Im Einzelnen beaufschlagt der Druck $p_{SK}$ in der Steuerkammer 42 die dieser zugewandte Fläche $A_{SK}$ des Relaiskolbens 46, der Arbeitskammerdruck $p_{AK}$ wirkt auf die dieser zugewandten Fläche $A_{AK}$. Die der Steuerkammer 42 zugewandte Fläche $A_{SK}$ des Relaiskolbens 46 ist größer als die der Arbeitskammer 58 zugewandte Fläche $A_{AK}$.

Auf den Relaiskolben 46 wirken also folgende Kräfte:

Aus Richtung Steuerkammer:

$$F_{st} = p_{SK} A_{SK}$$

Aus Richtung Arbeitskammer:

$$F_{AK} = F_F + p_{AK} A_{AK}$$

Wird die Manschette 52 nach unten bewegt, so muss zusätzlich die Kraft $F_{F2}$ der Manschettenfeder 62 überwunden werden. Schließlich müssen noch die Reibkräfte $F_{Reibung}$ der Dichtungen und Führungen von Relaiskolben 46 und Manschette 52 überwunden werden, wenn der Relaiskolben 46 bewegt werden soll.

Vor diesem Hintergrund ist die Funktionsweise der elektromagnetischen Parkbremssteuereinrichtung 1 wie folgt:

In dem in Fig.1 gezeigten Grundzustand der elektropneumatischen Parkbremssteuereinrichtung 1 sind sowohl das erste 2/2-Wegemagnetventil 10 als auch das zweite 2/2-Wegemagnetventil 12 unbestromt, so dass über das Drosselelement 30 der Steuereingang 20 stets mit dem ersten Arbeitsausgang 28 des Relaisventils 18 verbunden ist. Damit ist die Rückkopplung stabil und es kann keine Druckluft vom ersten Vorratsanschluss 2 zum Steuereingang 20 des Relaisventils 18 gelangen bzw. von diesem zur Drucksenke 24 entweichen. Damit wird auch der gerade herrschende Druck an dem Anschluss 40 für den wenigstens einen Federspeicherbremszylinder und dadurch auch dessen Zuspann- bzw. Lösestellung konstant gehalten.

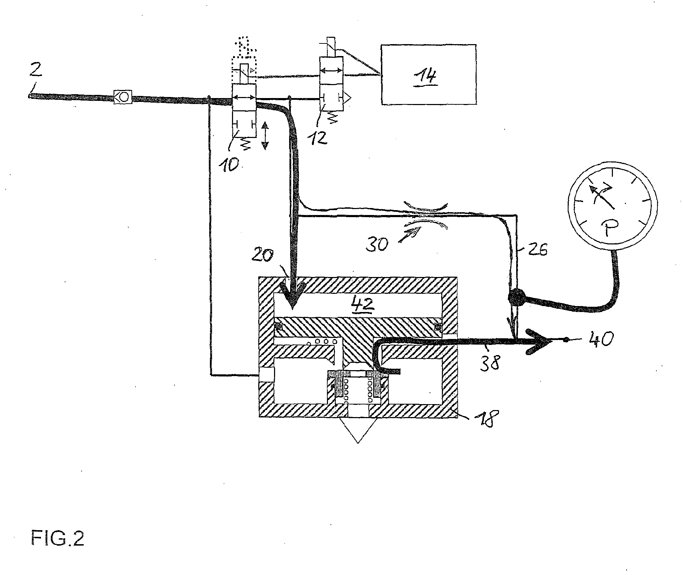

Soll nun auf ein entsprechendes Feststellbremssignal hin der Druck an dem Anschluss 40 für den wenigstens einen Federspeicherbremszylinder erhöht werden, beispielsweise im Betriebszustand "Hilfsbremse", so wird gemäß **Fig.2** durch Bestromung des ersten 2/2-Wegemagnetventils 10 dieses in Durchgangsstellung geschaltet und dadurch der Druck in der Steuerkammer 42 des Relaisventils 18 erhöht. Dies erfolgt insbesondere durch Pulsen des ersten 2/2-Wegemagnetventils 10.

Wenn dann gilt:

$$p_{SK} A_{SK} > F_F + F_{F2} + p_{AK} A_{AK} + F_{Reibung},$$

so bewegt sich der Relaiskolben 46 nach unten, öffnet den Einlasssitz 54 des Doppelsitzventils und lässt Vorratsdruck in die Arbeitskammer 58 einströmen. Wenn dann gilt:

$$p_{SK} A_{SK} + F_{Reibung} = F_F + p_{AK} A_{AK}$$

bewegt sich der Relaiskolben 46 zurück bis in eine Neutralstellung, in welcher Einlasssitz 54 und Auslasssitz 50 des Doppelsitzventils geschlossen sind.

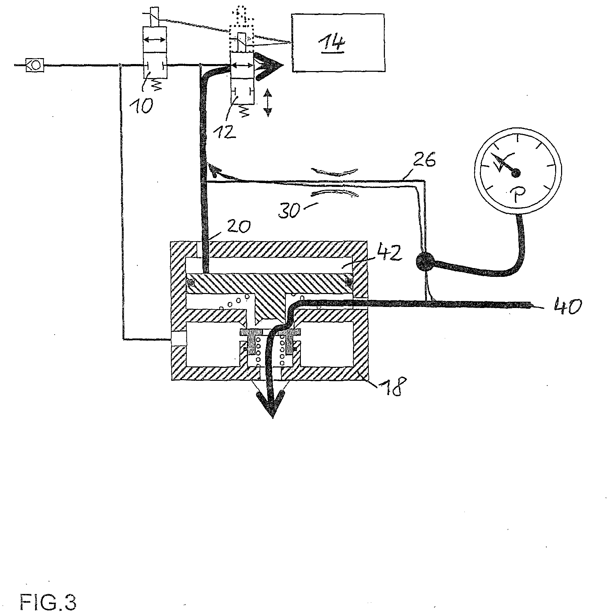

Soll demgegenüber auf ein entsprechendes Feststellbremssignal hin gemäß **Fig.3** ein geringerer Druck an dem Anschluss 40 für den wenigstens einen Federspeicherbremszylinder eingeregelt werden, beispielsweise im Betriebszustand "Hilfsbremse", so wird vorzugsweise durch Pulsen des zweiten 2/2-Wegemagnetventils 12 der Steuerdruck in der Steuerkammer 42 abgesenkt, bis gilt:

$$p_{SK} A_{SK} + F_{Reibung} < F_F + p_{AK} A_{AK}.$$

Dann bewegt sich der Relaiskolben 46 in Richtung Steuerkammer 42 und entlüftet die Arbeitskammer 58 über den Auslasssitz 50 des Doppelsitzventils, bis wieder Kräftegleichgewicht herrscht, worauf der Relaiskolben 46 wieder in Neutralstellung übergeht.

Da während der oben beschriebenen Drucksteuerung bzw. Druckregelung in der Steuerkammer 42 und in der Arbeitskammer 58 im Allgemeinen nicht die gleichen Drücke herrschen und über das Drosselelement 30 immer ein gewisse Luftmenge in Richtung des niedrigeren Drucks strömt, wird vorzugsweise daraus resultierende Anteil der Druckänderung in der Steuerkammer 42 durch entsprechende gepulste Steuerung des ersten 2/2-Wegemagnetventils 10 bzw. des zweiten 2/2-Wegemagnetventils 12 ausgeglichen. Dies gilt sowohl für Drucksteigern, Druckverringern als auch für Druckhalten, wenn nicht genau Vorratsdruck oder Atmosphärendruck am Anschluss 40 für den wenigstens einen Federspeicherbremszylinder herrschen sollen.

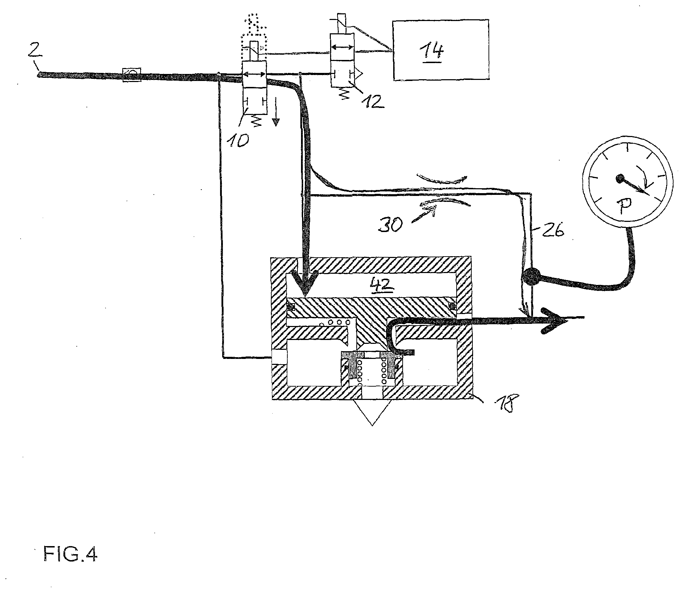

Zum Herstellen des Betriebszustands "Fahren" gemäß **Fig.4** auf ein entsprechendes Feststellbremssignal hin wird das erste 2/2-Wegemagnetventil 10 über längere Zeit bestromt. Dadurch wird die Steuerkammer 42 belüftet, auch wenn zunächst ein geringer Teil der vom ersten 2/2-Wegemagnetventil 10 zur Steuerkammer geleiteten Luft durch das Drosselelement (30) in die Arbeitskammer abströmt.

Wenn gilt:

$$p_{SK}A_{SK} > F_F + F_{F2} + F_{Reibung}$$

steigt auch der Druck in der Arbeitskammer 58, solange gilt:

$$p_{SK}A_{SK} > F_F + F_{F2} + p_{AK}A_{AK}$$

Da die Fläche $A_{SK}$ größer als die Fläche $A_{AK}$ ist, steigt in der Arbeitskammer 58 der Druck schneller als in der Steuerkammer 42 bis er ihn schließlich überschreitet. Dann strömt über die Rückkopplungsleitung 26 und das Drosselelement 30 Luft von der Arbeitskammer 58 in die Steuerkammer 42 über, so dass sich der Prozess selbst verstärkt.

Dadurch wird der Relaiskolben 46 stabil in seine untere, zur Arbeitskammer 58 weisende Endposition gedrängt, sodass er permanent den Einlasssitz 54 des Doppelsitzventils öffnet und die Arbeitskammer 58 mit dem ersten Vorratsanschluss 2 verbindet.

Da nun die Steuerkammer 42 über das Drosselelement 30, die Arbeitskammer 58 und den Einlasssitz 54 permanent mit Vorratsdruck versorgt wird, kann auch das erste 2/2-Wegemagnetventil 10 entstromt werden, um es in seine Sperrstellung zu schalten. Es gilt dann:

$$p_{SK} = p_{AK} = p_{Verorgung}$$

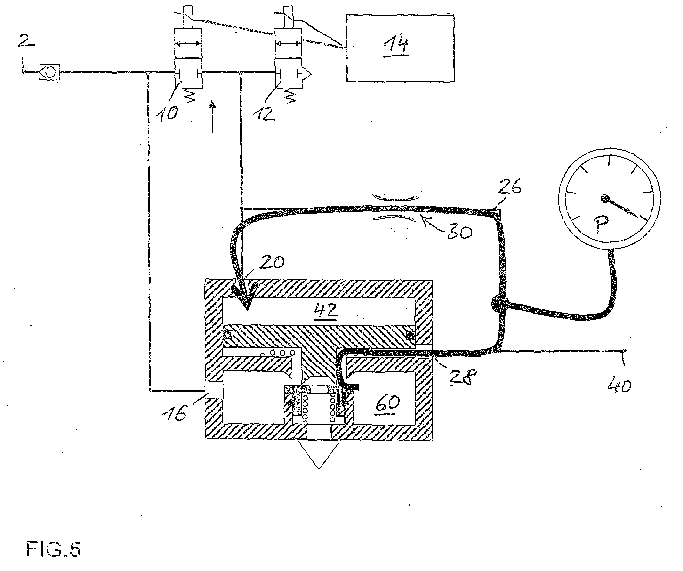

Der stabile Betriebszustand "Fahren" ist in **Fig.5** gezeigt, in dem der Relaiskolben 46 in der Belüftungsstellung bleibt und es gilt:

$$p_{Versorgung}A_{SK} + F_{Reibung} > F_F + F_{F2} + p_{Versorgung}A_{AK}$$

Sinkt in der Stellung "Fahren" der Vorratsdruck $p_{Versorgung}$ unter einen bestimmten Schwellwert ab, z.B. weil bei ausgeschaltetem Motor geringe Undichtigkeiten hinter Anschluss 40 nicht mehr nachgefördert werden, so überwiegt irgendwann die von der Relaiskolbenfeder 64 auf den Relaiskolben 46 wirkende Kraft und der Einlasssitz 54 wird geschlossen, der Auslasssitz 50 geöffnet und der Druck in der Arbeitskammer 58 entlüftet. Da das Drosselelement 30 die Steuerkammer 42 mit der Arbeitskammer 58 verbindet wird nun auch die Steuerkammer 42 entlüftet, wodurch die Federkräfte der Relaiskolbenfeder 64 nun noch mehr überwiegen. Die Parkbremse geht dann automatisch in die stabile Parkstellung.

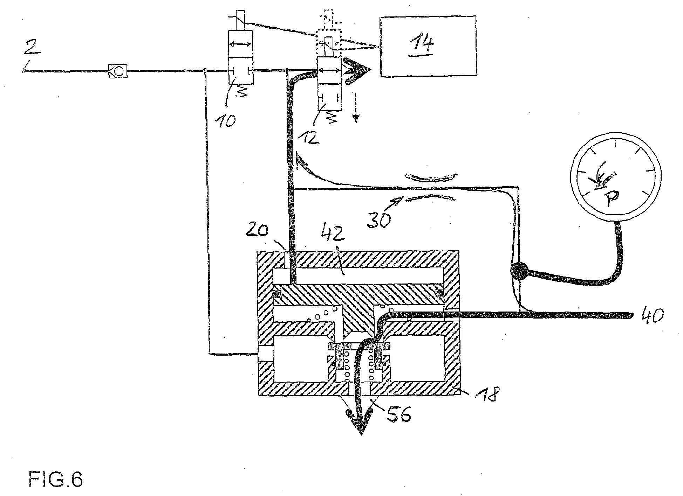

Zum Herstellen des Betriebszustands "Parken" gemäß **Fig.6** wird das zweite 2/2-Wegemagnetventil 12 über eine gewisse Zeitdauer bestromt. Dadurch wird die Steuerkammer 42 entlüftet, bis dort Atmosphärendruck herrscht.

Wenn gilt:

$$p_{SK}A_{SK} + F_{Reibung} < F_F + p_{AK}A_{AK}$$

bewegt sich der Relaiskolben 46 in Richtung Steuerkammer 42 und entlüftet die Arbeitskammer 58 über den Auslasssitz 50 des Doppelsitzventils.

Da die Fläche $A_{SK}$ deutlich größer ist als die Fläche $A_{AK}$, ist der Druck in der Arbeitskammer 58 zunächst noch höher als der in der Steuerkammer 42, weshalb Luft zunächst noch von der Arbeitskammer 58 über das Drosselelement 30 in Richtung Steuerkammer 42 strömt. Da jedoch der Öffnungsströmungsquerschnitt des zweiten 2/2-Wegemagnetventils 12 größer ist als der Strömungsquerschnitt des Drosselelements 30 an der Drosselstelle sinkt der Druck in der Steuerkammer 42 dennoch.

Da wegen der Flächenverhältnisse der Druck $p_{AK}$ in der Arbeitskammer schneller sinkt als der Druck $p_{SK}$ in der Steuerkammer wird Ersterer wegen der Relaiskolbenfeder 64 irgendwann kleiner als Letzterer. Nun dreht sich die Strömungsrichtung durch das Drosselelement 30 um und es strömt Luft von der Steuerkammer 42 zur Arbeitskammer 58, so dass sich der Prozess selbst verstärkt, bis überall Atmosphärendruck herrscht.

Die den Relaiskolben 46 belastende Relaiskolbenfeder 64 sorgt dafür, dass er sich bis in seine obere Endstellung bewegt und dort verharrt, wodurch der Auslasssitz 50 permanent vollständig geöffnet ist. Da nun die Steuerkammer 42 über das Drosselelement 30, die Arbeitskammer 58 und den geöffneten Auslasssitz 50 permanent mit Atmosphäre verbunden ist, kann das zweite 2/2-Wegemagnetventil 12 entstromt und damit in seine Sperrstellung gebracht werden.

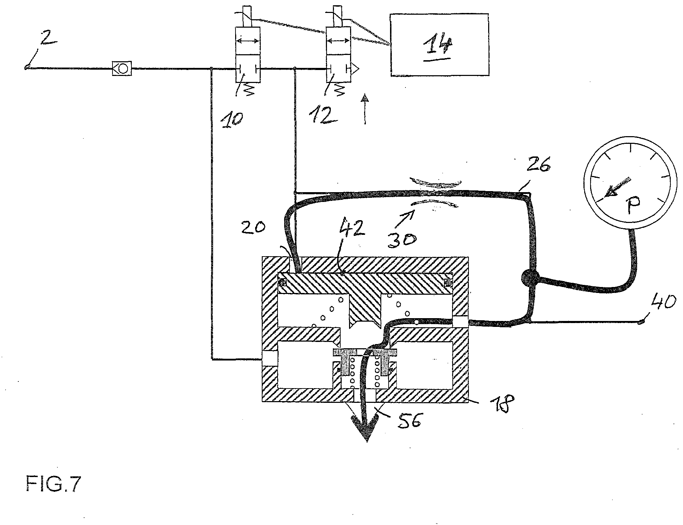

Den stabilen Betriebszustand "Parken" zeigt **Fig.7**.

Bei den nachfolgend beschriebenen Ausführungsformen sind gleiche oder gleich wirkende Bauteile und Komponenten mit Bezug auf die voran stehend beschriebene Ausführungsform mit den gleichen Bezugszahlen gekennzeichnet.

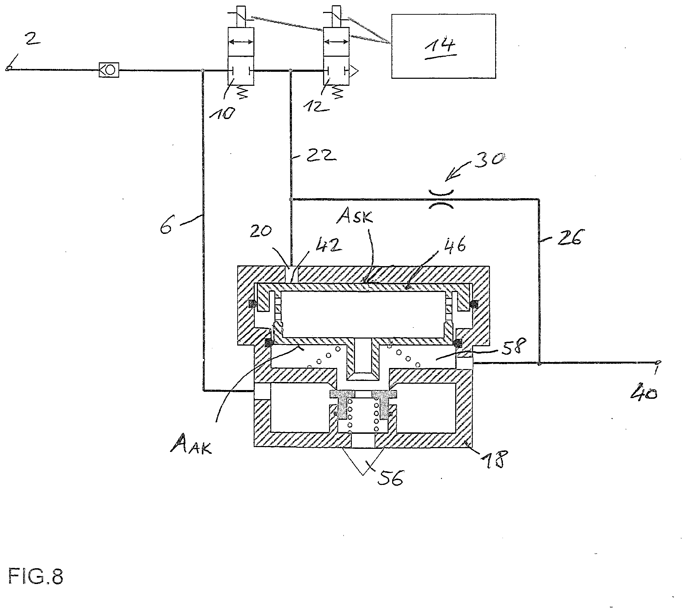

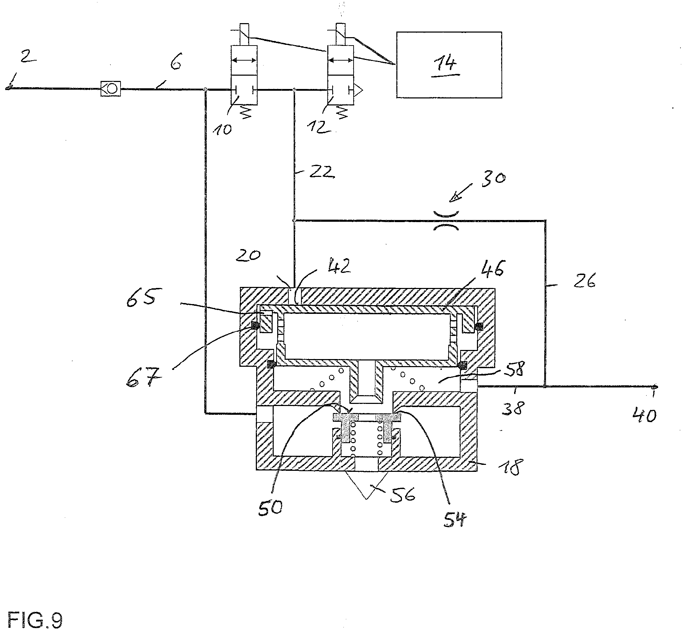

Bei der oben beschriebenen Ausführungsform ist die der Steuerkammer 42 zugewandte Wirkfläche $A_{SK}$ des Relaiskolbens 46 bereits um die Fläche, die vom Auslasssitz umspannt wird, größer als die der Arbeitskammer 58 zugewandte Wirkfläche $A_{AK}$. Wenn der Unterschied in den Wirkflächen noch größer sein soll, so kann gemäß der Ausführungsformen von **Fig.8** und **Fig.9** auch ein Stufenkolben als Relaiskolben 46 verwendet werden, bei dem die Wirkfläche $A_{SK}$ der der Steuerkammer 42 zugewandten Kolbenstufe größer ist als die Wirkfläche $A_{AK}$ der der Arbeitskammer zugewandten Wirkfläche Kolbenstufe, wobei der Raum zwischen den Dichtungen der beiden Kolbenstufen mit Atmosphäre verbunden ist. Auf diese Weise wird die Wirkfläche $A_{SK}$ für den Druck $p_{SK}$ in der Steuerkammer 42 gegenüber der Wirkfläche $A_{AK}$ für den Druck $p_{AK}$ in der Arbeitskammer 58 wesentlich vergrößert.

Um in der Stellung "Parken" eventuell auftretende, leichte Undichtigkeiten gegenüber einem Vorratsdruck führenden Bereich und damit ein ungewolltes Lösen der Parkbremse mit hoher Sicherheit zu vermeiden, kann gemäß der Ausführungsform von Fig. 9 ein weiteres Drosselelement 65 vorzugsweise am Relaiskolben 46 so angeordnet werden, dass es die Steuerkammer 42 mit einem kleinen Querschnitt zur Drucksenke 56 hin entlüftet, wenn sich der Relaiskolben 46 in einer Stellung befindet, in welcher er den Einlasssitz 50 des Doppelsitzventils noch nicht oder nicht vollständig geöffnet hat.

Dies kann beispielsweise gemäß Fig.9 dadurch realisiert werden, dass eine Relaiskolbendichtung 67 gehäusefest angebracht ist und z.B. der Relaiskolben 46 das weitere Drosselelement 65 in seiner Mantelwandung als Durchgangsbohrung aufweist, derart, dass das weitere Drosselelement 65 mit der Relaiskolbendichtung 67 zusammen wirken und stellungsabhängig die Steuerkammer 42 mit der Entlüftung 56 verbinden oder diese Verbindung sperren kann. Daher wirkt das weitere Drosselelement 65 mit der Relaiskolbendichtung 67 derart zusammen, dass je nach Position des Relaiskolbens 46 bzw. des Stufenkolbens 46a eine gedrosselte Verbindung zwischen der Drucksenke 56 (Atmosphäre) und der Steuerkammer 42 zustande kommt oder unterbrochen wird, wie anhand von Fig.9 leicht vorstellbar ist.

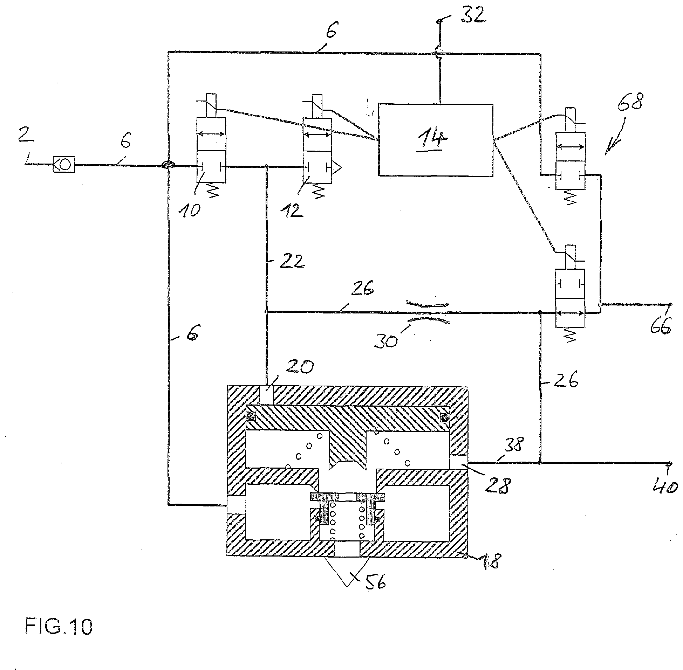

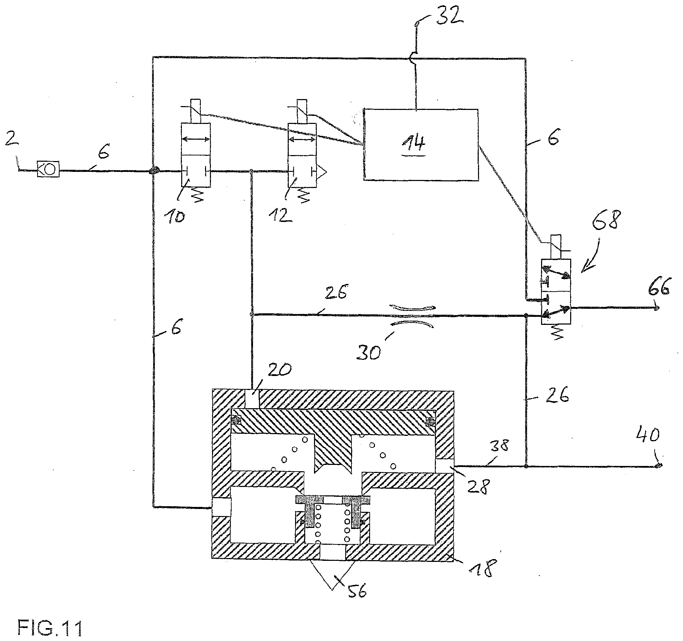

Falls mittels der elektro-pneumatischen Parkbremssteuereinrichtung 1 eine Ansteuerung eines Anhängersteuerventils (ASV) vorgesehen ist, so kann diese wie in den Ausführungsformen nach **Fig.10** und **Fig.11** dargestellt so ausgeführt werden, dass der an dem Anschluss 40 für den wenigstens einen Federspeicherbremszylinder anstehende Druck gleichzeitig zu einem Anschluss 66 für ein Anhängersteuerventil geleitet wird. In diesem Fall muss der Fahrer jedoch die Möglichkeit haben, bei eingelegter Parkbremse den Anschluss 66 für das Anhängersteuerventil zu belüften, damit die Bremsen des Anhängers lösen und der Fahrer testen kann, ob die Federspeicherbremse des Zugfahrzeugs 170 alleine die Zugfahrzeug-Anhänger-Kombination im Stillstand halten kann ("Testfunktion"). Diese "Testfunktion" wird durch eine zweite, von der elektronischen Steuereinrichtung 14 steuerbare Magnetventileinrichtung 68 realisiert, die vorzugsweise zwei 2/2-Wegemagnetventile gemäß Fig.10 oder ein einziges 3/2-Wegemagnetventil gemäß Fig.11 beinhaltet bzw. gebildet wird. Das Magnetventil 68 bzw. die Magnetventile 68 sind bevorzugt so geschaltet, dass sie im unbestromten Zustand den Anschluss 66 für das Anhängersteuerventil mit dem Anschluss 40 für den wenigstens einen Federspeicherbremszylinder verbinden und im bestromten Zustand mit dem ersten Vorratsanschluss 2. Mit anderen Worten ist die zweite Magnetventileinrichtung 68 ausgebildet, dass sie entweder den ersten Vorratsanschluss 2 mit dem Anschluss 66 für das Anhängersteuerventil oder den ersten Arbeitsausgang 28 des Relaisventils 18 mit dem Anschluss 66 für das Anhängersteuerventil verbindet.

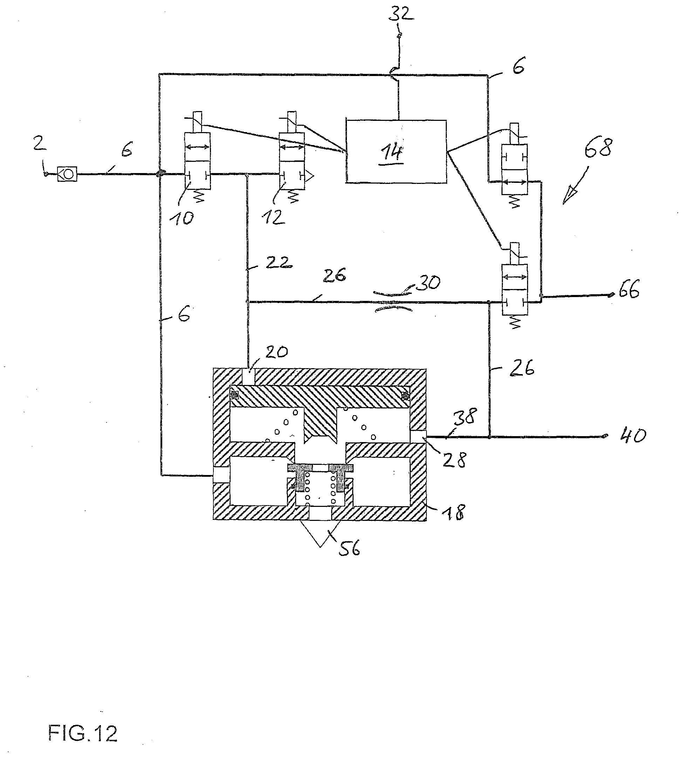

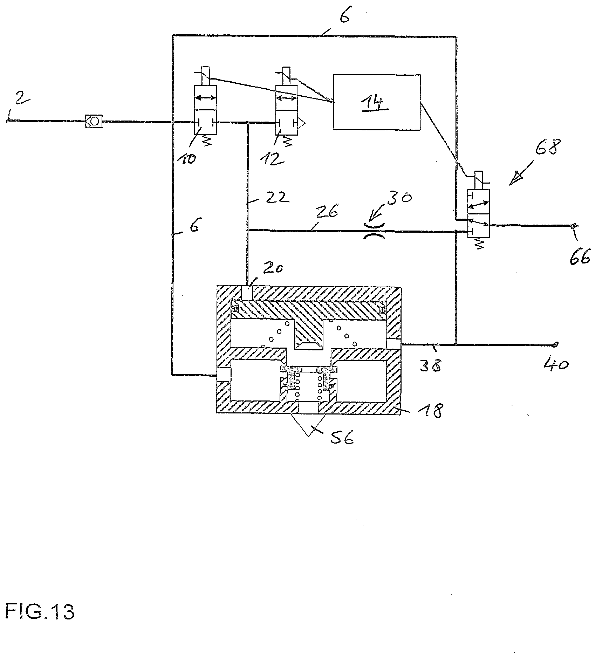

Wenn der Anhänger bei voll zugespannter Parkbremse und abgeschalteter Stromversorgung nicht mitbremsen soll, so muss der Anschluss 66 für das Anhängersteuerventil bei diesen Betriebsbedingungen mit Vorratsdruck verbunden sein. Wird jedoch der Druck am Anschluss 66 für das Anhängersteuerventil gerade geregelt, beispielsweise im Rahmen der Funktion "Hilfsbremsen", so soll der Anhänger mitbremsen. Diese Funktionalität wird in einer weiteren Ausführungsvariante bevorzugt ebenfalls mittels der zweiten Magnetventileinrichtung 68 beispielsweise in Form zweier 2/2-Wegemagnetventile nach **Fig.12** oder eines einzigen 3/2-Wegemagnetventils nach Fig.13 realisiert. Diese Magnetventile 68 sind jedoch gegenüber Fig.10 und Fig.11 umgekehrt verschaltet, so dass im stromlosen Zustand Vorratsdruck am Anschluss 66 für das Anhängersteuerventil ansteht und während einer Druckregelung durch Bestromung dieser Magnetventile 68 der Anschluss 66 für das Anhängersteuerventil mit dem Anschluss 40 für den wenigstens einen Federspeicherbremszylinder verbunden ist. Die zweite Magnetventileinrichtung 69 nach Fig.12 und **Fig.13** ist dann so ausgebildet, dass sie stromlos den ersten Vorratsanschluss 2 mit dem Anschluss 66 für das Anhängersteuerventil verbindet. Andererseits verbindet die zweite Magnetventileinrichtung 68 bestromt den ersten Arbeitsausgang 28 des Relaisventils 18 mit dem Anschluss 66 für das Anhängersteuerventil.

Wenn auch bei durch Ausfall oder Abschalten (Zündung "Aus") deaktivierter elektrischer Energieversorgung die Feststellbremse noch zuspannbar sein soll, so kann beispielsweise über ein manuell betätigbares Ventil 72a oder von einer gegenüber der vorhandenen Bordenergieversorgung (z.B. Batterie) zusätzlichen elektrischen Energieversorgung 73 (z.B. weitere Batterie) versorgtes Magnetventil 72b der Steuereingang 20 des Relaisventils 18 entlüftet werden.

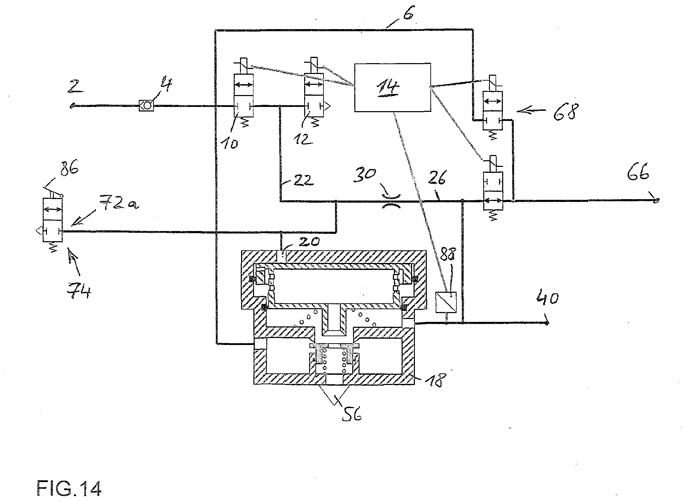

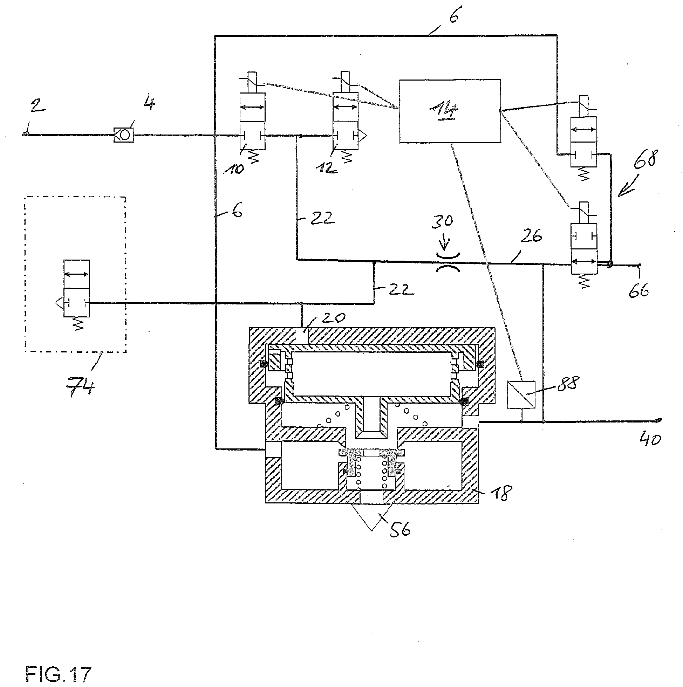

Demzufolge kann gemäß der Ausführungsformen von **Fig.14** bis **Fig.17** eine dritte Ventileinrichtung 74 vorgesehen sein, mit beispielsweise einem manuell (72a) oder elektrisch (72b) steuerbaren Ventil 72a, 72b mit einer Durchlassstellung und einer Sperrstellung, welches in der Durchlassstellung den Steuereingang 20 des Relaisventils 18 mit einer Drucksenke 84 verbindet oder in der Sperrstellung diese Verbindung sperrt.

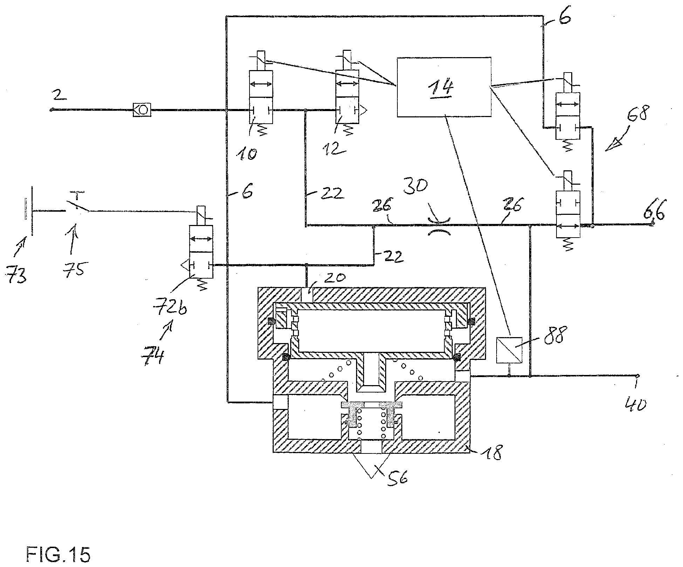

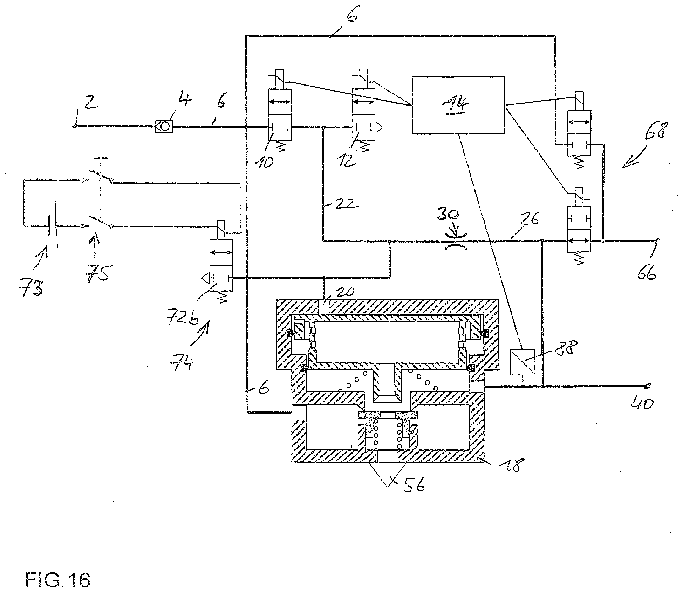

Gemäß Fig.14 kann beispielsweise ein manuelles Ventil 72a oder gemäß **Fig.15** und **Fig.16** ein Magnetventil 72b verwendet werden, welches mittels eines elektrischen Schalters 75 betätigt wird, der es mit der zusätzlichen elektrischen Energiequelle 73 verbindet. Um zu verhindern, dass das Magnetventil 72b durch einen Fehler in der Verkabelung versehentlich bestromt wird, kann gemäß Fig.16 ein Schalter mit doppeltem Schaltkontakt für den Pluspol und Masse verwendet werden.

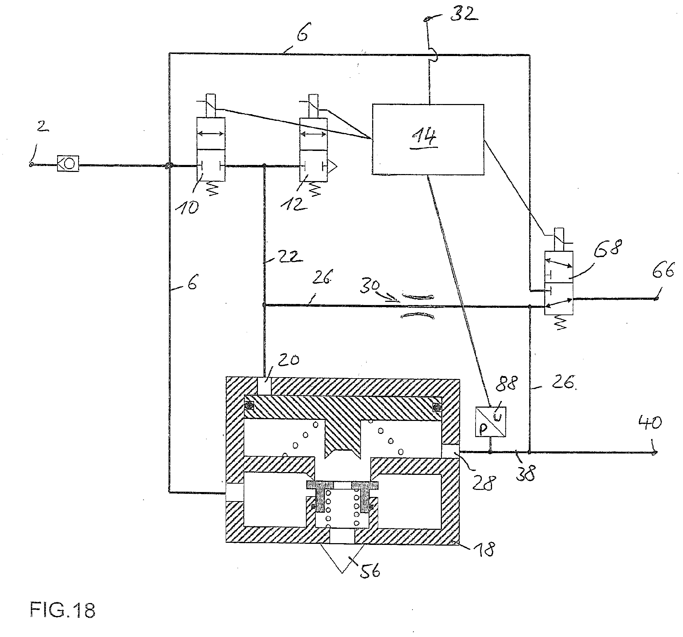

Nach den in Fig.18 bis Fig.23 gezeigten Ausführungsformen ist die elektronische Steuereinrichtung 14 ausgebildet, dass sie auf der Basis eines einen Ist-Druck repräsentierenden Signals und eines einen Wert für einen Soll-Druck repräsentierenden Feststellbremssignals einen Soll-Ist-Abgleich im Rahmen einer Druckregelung und/oder eine Druck-Plausibilitätsprüfung und/oder eine Ermittlung des am ersten Vorratsanschluss 2 anstehenden Vorratsdrucks durchführt.

Falls beispielsweise nach der Ausführungsform von **Fig.18** ein Drucksensor 88 am ersten Arbeitsausgang 28 des Relaisventils 18 angeschlossen und damit auch mit dem Anschluss 40 für den wenigstens einen Federspeicherbremszylinder bzw. mit dem Anschluss 66 für das Anhängersteuerventil verbindbar bzw. verbunden ist, so kann dort der Ist-Druck und daraus der Betriebszustand des wenigstens einen Federspeicherbremszylinders (gelöst, zugespannt bzw. teilweise gelöst oder zugespannt) ermittelt werden. Das Gleiche gilt dann auch für den Betriebszustand der Anhängerbremsen, welcher aus dem Ist-Druck am Anschluss 66 für das Anhängersteuerventil ermittelbar ist, wenn sich die zweite Magnetventileinrichtung 68 in der Stellung befindet, in welcher der Anschluss 66 für das Anhängersteuerventil mit dem Anschluss 40 für den wenigstens einen Federspeicherbremszylinder verbunden ist. Weiterhin wird ein Druckregelkreis realisiert, bei welchem die erste Magnetventileinrichtung 8 in Verbindung mit dem Relaisventil 18 die Stellglieder bilden. Wenn ausschließlich der Drucksensor 88 verwendet wird, erkennt jedoch der Druckregler Druckabweichungen erst, wenn sich bereits eine Abweichung im Arbeitsausgangsdruck des Relaisventils eingestellt hat. Dies kann zu erhöhtem Druckluftverbrauch führen.

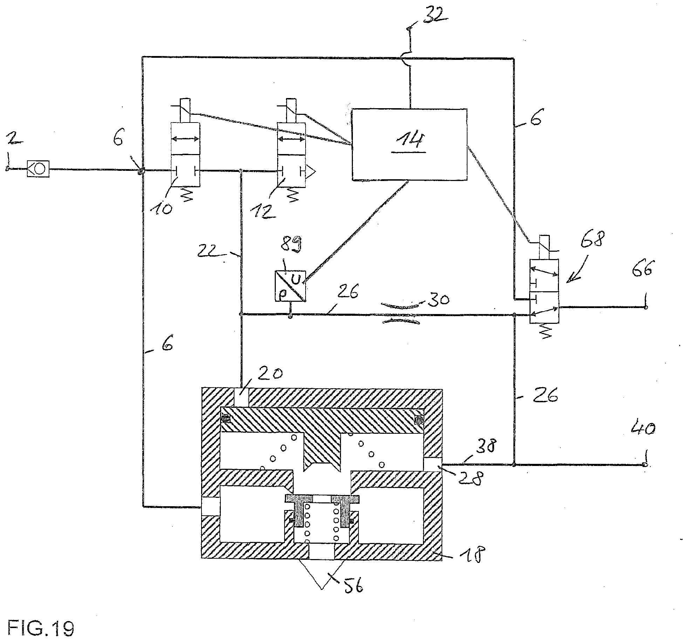

Falls gemäß **Fig.19** ein Drucksensor 89 mit dem Steuereingang 20 des Relaisventils verbunden wird, so kann sehr schnell der von dem ersten und zweiten 2/2-Wegemagnetventil 10, 12 eingeregelte Ist-Druck ermittelt werden, was in einer hohen Dynamik des Druckregelkreises resultiert. Darüber hinaus können auch der Betriebszustand des wenigstens einen Federspeicherbremszylinders (gelöst, zugespannt bzw. teilweise gelöst oder zugespannt) sowie der dort herrschende Ist-Bremsdruck ermittelt werden, allerdings mit einer geringeren Genauigkeit gegenüber der Verwendung des Drucksensors 88, da Ansprechverhalten und Hysterese des Relaisventils als Fehler eingehen. Das Gleiche gilt dann auch für den Betriebszustand der Anhängerbremsen. Besonders vorteilhaft bei Verwendung des Drucksensors 89 ist, dass der Druckregler Druckabweichungen in der Steuerkammer so fein ausregeln kann, dass sie noch nicht zu einer Druckabweichung am Arbeitsausgang des Relaisventils führen.

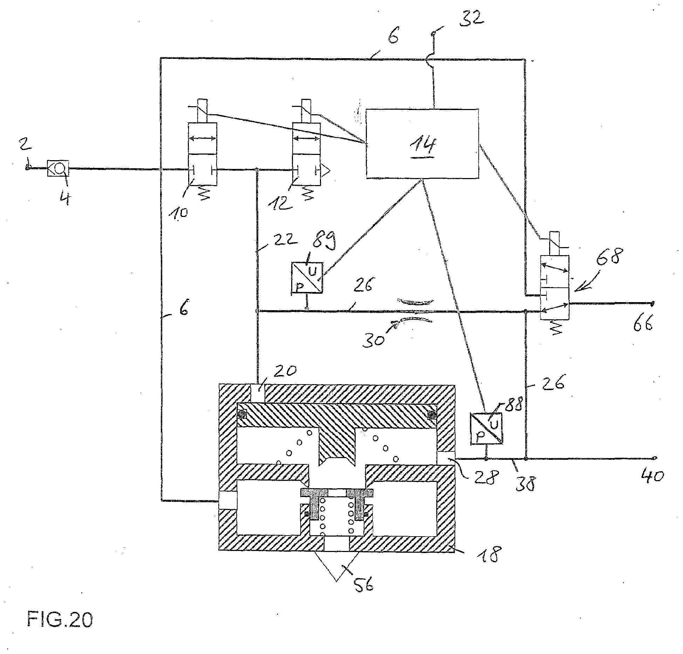

Falls gemäß **Fig.20** ein erster Drucksensor 88 mit dem ersten Arbeitsausgang 28 und ein zweiter Drucksensor 89 mit dem Steuereingang des Relaisventils 18 verbunden werden, ermöglicht dies auch eine Fehlererkennung mittels Plausibilitätsprüfung. Beispielsweise müssen die Ist-Druckwerte des ersten und zweiten Drucksensors 88, 89 je nach Betriebszustand unter Berücksichtigung von bestimmten Toleranzen in einer bestimmten Relation zueinander stehen. Dabei ist die Fehlererkennung oder Fehlerüberwachung schnell, vollständig und in mehreren Betriebszuständen durchführbar. Weiterhin ergibt sich eine schnellere Druckregelung mit weniger Druckluftverbrauch als wenn nur ein Drucksensor 88 am ersten Arbeitsausgang 28 des Relaisventils 18 und eine genauere Druckregelung des Arbeitsausgangsdrucks als wenn nur ein Drucksensor 89 am Steuereingang 20 des Relaisventils 18 angeordnet ist.

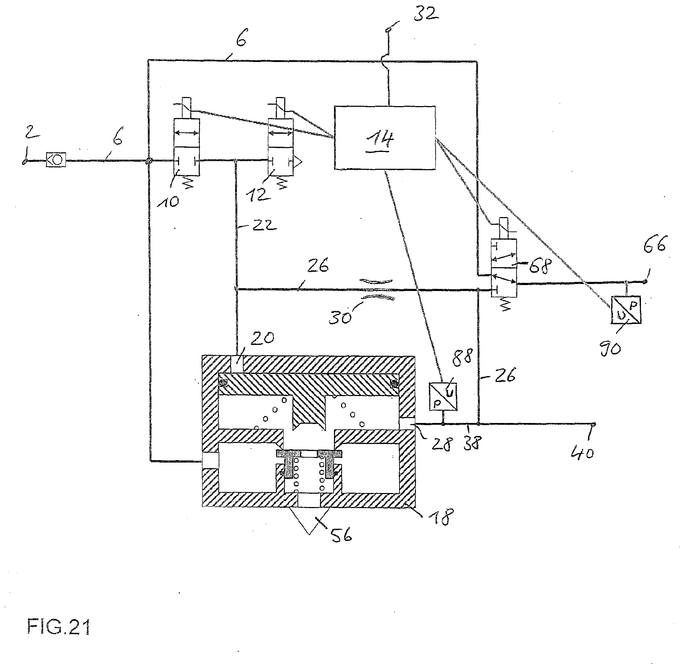

Bei der Ausführungsform von **Fig.21** sind ein erster Drucksensor 88 mit dem ersten Arbeitsausgang 28 des Relaisventils 18 und ein weiterer Drucksensor 90 mit dem Anschluss 66 für das Anhängersteuerventil verbunden, so dass neben einer Druckregelung auch eine Plausibilitätsprüfung möglich ist. Denn der Druck an dem Anschluss 66 für das Anhängersteuerventil muss dem Druck an dem Anschluss 40 für den wenigstens einen Federspeicherbremszylinder entsprechen, wenn die zweite Magnetventileinrichtung 68 eine entsprechende Verbindung schaltet. Hat die zweite Magnetventileinrichtung 68 eine Verbindung zwischen Vorratsdruck und Anschluss 66 geschaltet, kann mit dem Drucksensor 90 der Vorratsdruck gemessen werden.

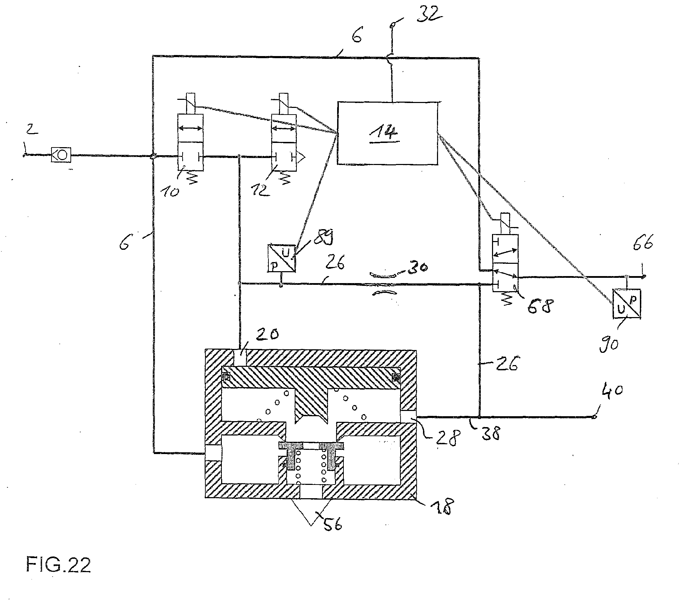

Bei der Ausführungsform nach **Fig.22** sind ein Drucksensor 89 mit dem Steuereingang 20 des Relaisventils 18 und ein weiterer Drucksensor 90 mit dem Anschluss 66 für das Anhängersteuerventil verbunden. Da bei einer Druckregelung, beispielsweise zum Zwecke einer Hilfsbremsung, die zweite Magnetventileinrichtung 68 so geschaltet ist, dass der Anschluss 66 mit dem ersten Arbeitsausgang 28 des Relaisventils verbunden ist, ergeben sich in diesem Betriebszustand die gleichen Vorteile wie im Falle der Ausführungsform gemäß Fig.20. denn der Druck an dem Anschluss 66 für das Anhängersteuerventil muss dem Druck an dem Anschluss 40 für den wenigstens einen Federspeicherbremszylinder entsprechen, wenn die zweite Magnetventileinrichtung 68 eine entsprechende Verbindung schaltet. Hat die zweite Magnetventileinrichtung 68 eine Verbindung zwischen Vorratsdruck und Anschluss 66 geschaltet, kann mit dem Drucksensor 90 der Vorratsdruck gemessen werden.

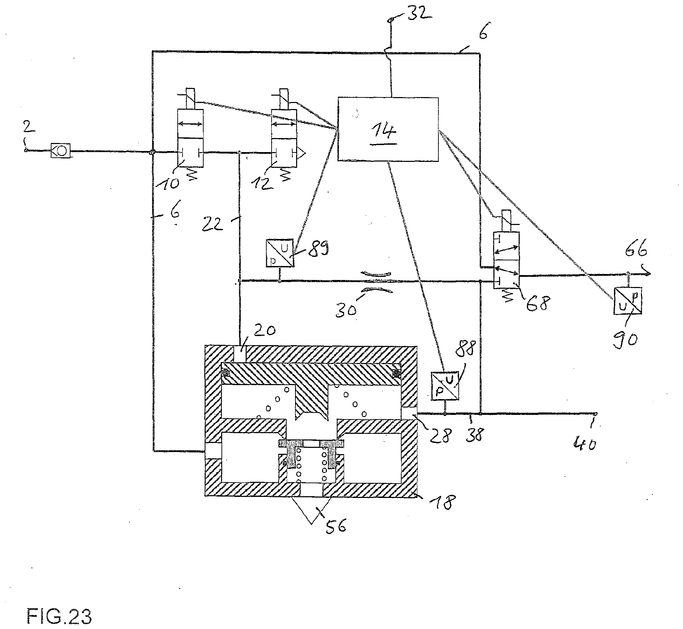

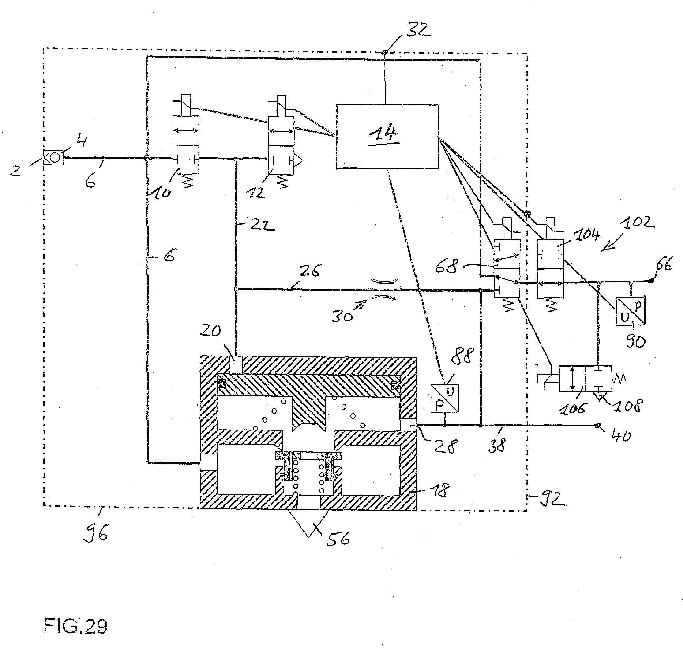

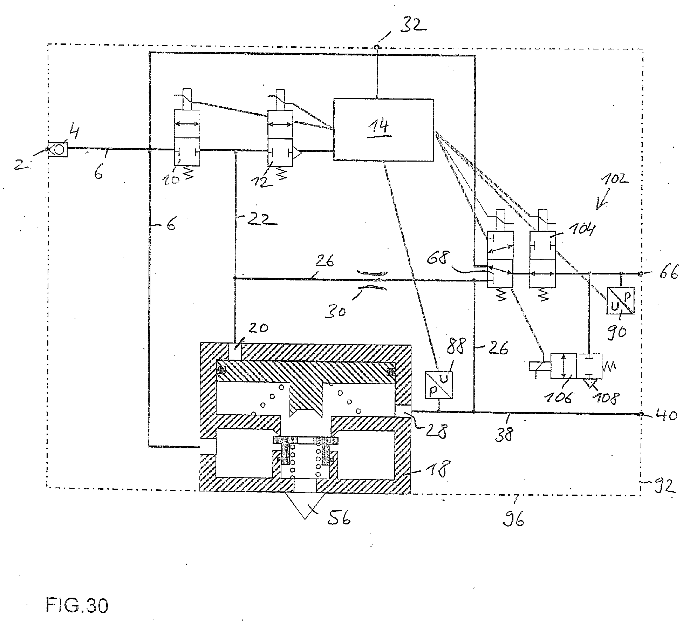

Falls gemäß **Fig.23** zusammen mit einem ersten Drucksensor 88 am ersten Arbeitsausgang 28 einem zweiten Drucksensor 89 am Steuereingang 20 des Relaisventils 18 ein weiterer Drucksensor 90 mit dem Anschluss 66 für das Anhängersteuerventil verbunden wird, so ist in mehreren Betriebszuständen eine direkte Messung des Vorratsdrucks am ersten Vorratsanschluss möglich, wenn die dritte Magnetventileinrichtung ohne dass der Betriebszustand "Fahren" eingestellt werden muss. Weiterhin ist auch eine schnelle Fehlererkennung mittels Plausibilitätsprüfung möglich. Beispielsweise müssen die Ist-Drücke der Drucksensoren 88 und 90 gleiche Werte anzeigen, wenn die zweite Magnetventileinrichtung 68 so geschaltet ist, dass eine Druckverbindung zwischen den Drucksensoren 88, 90 zustande kommt. Wie zuvor ist auch in mehreren Betriebszuständen eine Ermittlung des Vorratsdrucks möglich. Vorteilhafter Weise wird dadurch auch eine Druckregelung des Drucks am Anschluss 66 für das Anhängersteuerventil möglich, wenn der Betriebszustand "Streckbremse" vorgesehen ist (**Fig.29, Fig.30),** in dem zum Strecken der Zugfahrzeug-Anhängerkombination lediglich die Anhängerbremsen, nicht aber die Zugfahrzeugbremsen dosiert zugespannt werden.

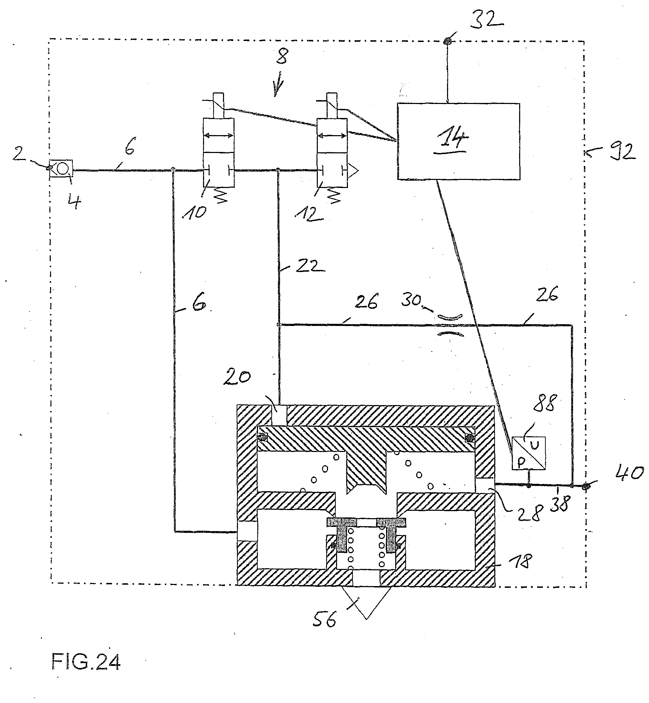

Gemäß der Ausführungsform von **Fig.24** sind das Relaisventil 18, die erste Magnetventileinrichtung 8 (erstes und zweites 2/2-Wegemagnetventil 10, 12), das Rückschlagventil 4, das Drosselelement 30, die elektronische Steuereinrichtung 14 sowie der erste Vorratsanschluss 2, der Anschluss 40 für den wenigstens einen Federspeicherbremszylinder und der Feststellbremssignalanschluss 32 in einer in Fig.24 durch eine strichpunktierte Linie symbolisierte Baueinheit 92 ausgebildet, die hier ein erweiterbares Grundmodul darstellt. In das Grundmodul bzw. die Baueinheit 92 kann weiterhin zumindest ein Drucksensor 88 integriert sein, der hier beispielsweise mit dem Anschluss 40 für den wenigstens einen Federspeicherbremszylinder verbunden ist. Weiterhin sind natürlich auch die die genannten Komponenten pneumatisch oder elektrisch miteinander verbindenden elektrischen und pneumatischen Leitungen in die Baueinheit 92 integriert. Die Baueinheit oder das Grundmodul 92 kann ein einziges Gehäuse aufweisen oder aus mehreren, lösbar oder nicht lösbar miteinander verbundenen Gehäusen oder Gehäuseteilen bestehen.

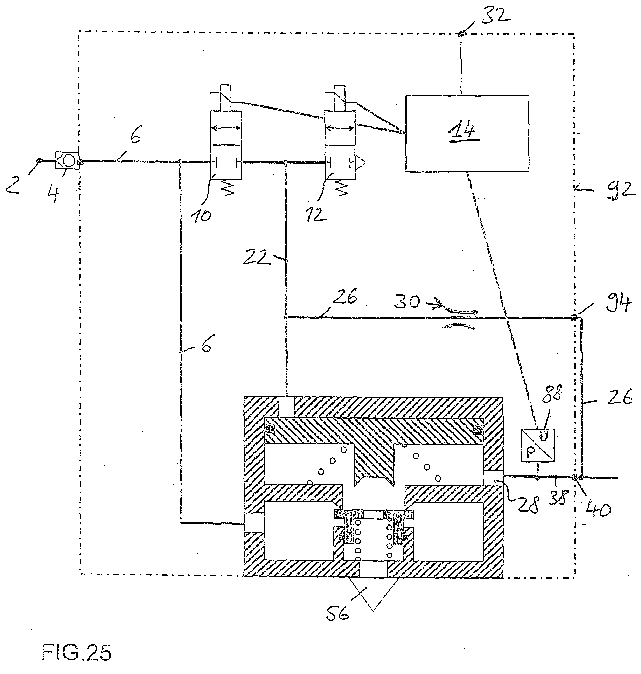

Bei der Ausführungsform von **Fig.25** ist das Grundmodul 92 von Fig.24 dahingehend modifiziert, dass das Rückschlagventil 4 und wenigstens ein Teil der Rückkopplungsleitung 26 zwischen dem Steuereingang 20 des Relaisventils 18 und dem Anschluss 40 für den wenigstens einen Federspeicherbremszylinder bzw. dem ersten Arbeitsausgang 28 des Relaisventils 18 außerhalb der Baueinheit 92 angeordnet ist. Insbesondere das Rückschlagventil 4 kann je nach Fahrzeugausstattung bereits in ein Gerät zur Druckluftversorgung integriert sein, sodass es hier nicht mehr nötig ist. Für den externen Teil der Rückkopplungsleitung 26 ist dann ein eigener Anschluss 94 am Gehäuse 96 der Baueinheit 92 vorgesehen. Dann kann als Baueinheit 92 ein intern allenfalls gering modifizierter, bei elektronisch geregelten Betriebsbremsen (EBS) üblicherweise verwendeter elektropneumatischer Modulator (EPM) verwendet und durch die genannten äußeren Modifikationen angepasst werden.

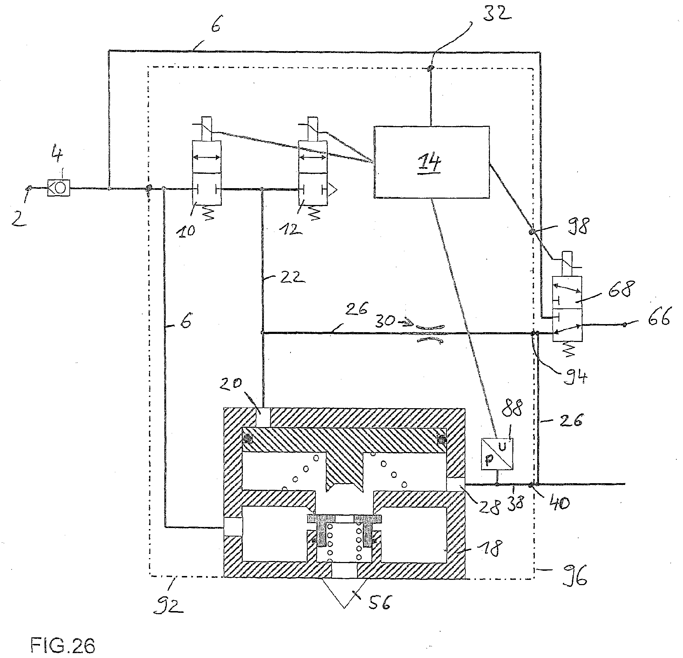

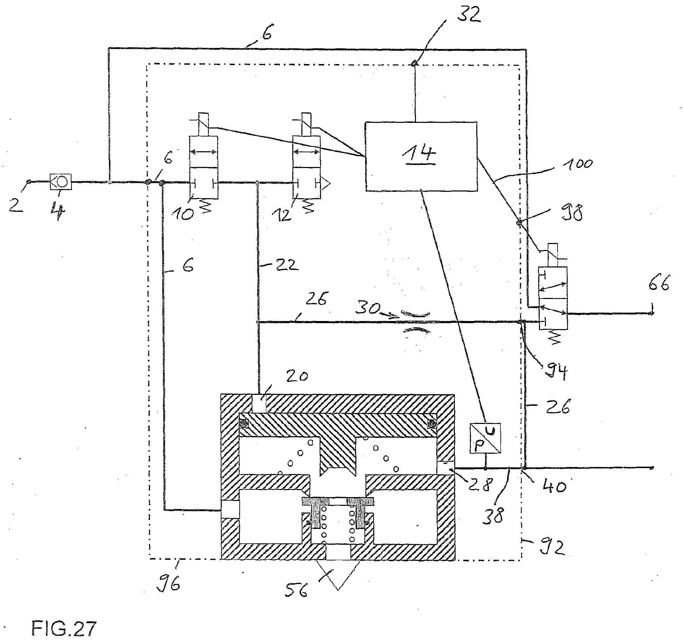

Zusätzlich kann gemäß **Fig.26** und **Fig.27** die zweite Magnetventileinrichtung 68 außerhalb der Baueinheit 92 angeordnet sein. Die beispielsweise extern angeflanschte zweite Magnetventileinrichtung 68 wird dann von einer auch externen Vorratsleitung 6 mit Druckluft versorgt. Schließlich ist auch am Gehäuse 96 der Baueinheit 92 ein elektrischer Anschluss 98 für die zweite Magnetventileinrichtung 68 vorgesehen, damit diese über eine Signalleitung 100 von der Steuereinrichtung 14 der Baueinheit 92 gesteuert werden kann.

Mit an die Baueinheit 92 extern angeflanschter und verkabelter zweiter Magnetventileinrichtung 68 zur Realisierung der Testfunktion und/oder zur Steuerung der Anhängerbremsen kann hierfür beispielsweise ein übliches und in hoher Stückzahl gefertigtes ASR-Magnetventil (Antischlupfregelungsventil) verwendet werden.

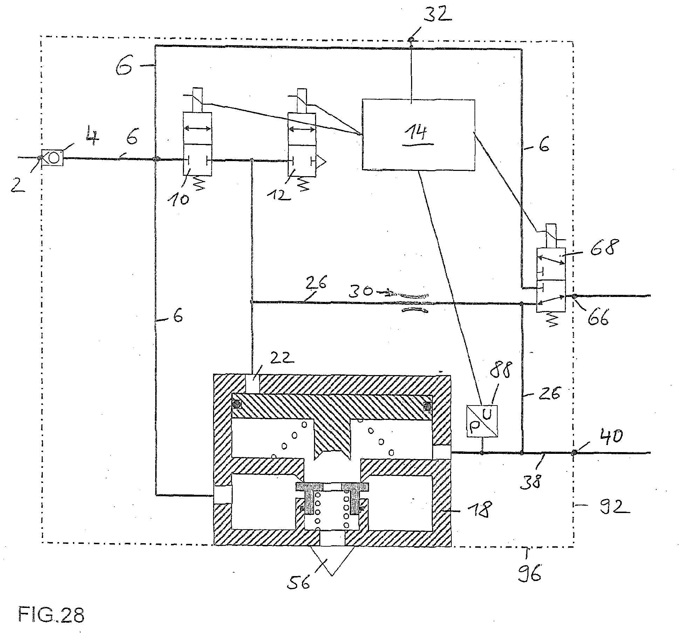

Alternativ hierzu kann gemäß **Fig.28** die zweite Magnetventileinrichtung 68 auch innerhalb der Baueinheit 92 angeordnet, beispielweise angeflanscht oder zusammengeschraubt werden, wodurch der Aufwand für externe Verrohrung und Verkabelung verringert wird.

Es sei noch erwähnt, dass eine Zusammenfassung der elektropneumatischen Parkbremssteuereinrichtung mit einem anderen elektronisch gesteuerten Fahrzeugsystem zu einer Baueinheit vorteilhaft sein kann, da eine gemeinsame, elektronische Steuereinrichtung vorgesehen werden kann. Insbesondere die Zusammenfassung mit einer Luftaufbereitungsanlage bietet Vorteile, da hier auch die Vorratsleitung zur elektropneumatischen Parkbremssteuereinrichtung entfallen kann.

Gemäß einer Weiterbildung nach **Fig.29** und **Fig.30** kann eine vierte Magnetventileinrichtung 102, durch welche die Funktion "Streckbremsen" realisiert wird, außerhalb oder innerhalb der Baueinheit 92 angeordnet sein. Diese vierte Magnetventileinrichtung 102 beinhaltet ein viertes 2/2-Wegemagnetventil 104, welches einerseits mit dem Anschluss 66 für das Anhängersteuerventil und andererseits mit einem fünften 2/2-Wegemagnetventil 106 verbunden ist, welches den Druck an dem vierten 2/2-Wegemagnetventil 104 in seiner Durchlassstellung an eine Drucksenke 108 weiter schaltet. Diese vierte Magnetventileinrichtung 102 ist in Strömungsrichtung gesehen der zweiten Magnetventileinrichtung 68 nachgeordnet, durch welche hier die "Testfunktion" realisiert wird.

Zum Streckbremsen muss das Anhängersteuerventil dosiert entlüftet werden können, weshalb hierzu das vierte 2/2-Wegemagnetventil 104 zunächst in Sperrstellung und das fünfte 2/2-Wegemagnetventil 106 abhängig von dem entsprechenden elektrischen Zuspannsignal z.B. wechselweise oder gepulst von der Sperrstellung in die Durchlassstellung geschaltet wird. Zum Lösen der Streckbremse wird dann das vierte 2/2- Wegemagnetventil ganz oder gepulst zurück in Durchlassstellung geschaltet. Ist die zweite Magnetventileinrichtung 68 als Kombination aus zwei 2/2- Wegemagnetventilen aufgebaut, so kann diese die Absperrfunktion bereits ausführen können sodass das 2/2- Wegemagnetventilen 104 entfallen kann.

Eine elektro-pneumatische Parkbremssteuereinrichtung 1 mit einem Anschluss 66 für ein Anhängersteuerventil gemäß Fig.10 bis Fig.23 oder Fig.26 bis **Fig.30** ist als bevorzugte Ausführungsform in eine elektro-pneumatische Parkbremseinrichtung 200 nach den Figuren 31 bis 35 eingebaut. Es ist dabei klar, dass, falls das Fahrzeug 170 nicht zum Ziehen eines Anhängers ausgebildet ist, der Anschluss 66 für das Anhängersteuerventil entfällt und dann eine elektropneumatische Parkbremssteuereinrichtung gemäß Fig.1 bis Fig.9 oder Fig.24, Fig.25 in die elektro-pneumatische Parkbremseinrichtung nach den Figuren 31 bis 35 eingebaut sein kann.

Die elektro-pneumatische Parkbremseinrichtung 200 nach **Fig.31** ist hier insbesondere auf einem Zugfahrzeug 170 einer Zugfahrzeug-Anhängerkombination angeordnet und umfasst eine elektronische Steuereinrichtung 14, einen Druckluftvorrat 110, eine elektro-pneumatische Parkbremssteuereinrichtung 1 mit einem Anschluss 66 für ein Anhängersteuerventil gemäß den Ausführungsformen von Fig.10 bis Fig.23 oder Fig.26 bis Fig.30.

Die elektro-pneumatische Parkbremssteuereinrichtung 1 weist weiterhin, wie bereits oben beschrieben, von der elektronischen Steuereinrichtung 14 gesteuerte elektromagnetische Ventile 10, 12, 68 bzw. 104, 106, einen ersten, mit dem Druckluftvorrat 110 in Verbindung stehenden ersten Vorratsanschluss 2, eine erste Entlüftung 56 sowie einen ersten Arbeitsausgang 28 auf, der an den Anschluss 40 für Federspeicherbremszylinder 112 angeschlossen ist.

Die elektro-pneumatische Parkbremssteuereinrichtung 1 ist bevorzugt außerhalb der Kabine 114 an einem Rahmen 116 des Zugfahrzeugs 170 angeordnet. Zwischen dem in der Kabine 114 angeordneten Feststellbremssignalgeber 36 und dem Feststellbremssignalanschluss 32 der elektro-pneumatischen Parkbremssteuereinrichtung 1 erstreckt sich eine Signalleitung 118 zur Übermittlung von Parkbremssteuersignalen, die der Fahrer vorgibt.

Wie oben bereits beschrieben, kann die elektro-pneumatische Parkbremssteuereinrichtung 1 als Zustände wenigstens den Zustand "Fahren" und den Zustand "Parken" stabil einnehmen, wobei der erste Arbeitsausgang 28 bzw. der Anschluss 40 für die Federspeicherbremszylinder 112 in dem Zustand "Fahren" von dem Druckluftbehälter 110 belüftet und in dem Zustand "Parken" entlüftet ist. Grundsätzlich arbeitet die elektronische Steuereinrichtung 14 nach den Parkbremssteuersignalen des Feststellbremssignalgebers 36 und stellt dann abhängig von diesen Steuersignalen wenigstens die stabilen Zustände "Fahren" und "Parken" in der elektro-pneumatischen Parkbremssteuereinrichtung 1 ein.

Zusätzlich oder alternativ kann die elektronische Steuereinrichtung 14 aber auch Parkbremssteuersignale von anderen Autoritäten wie z.B. von einer elektronischen Steuereinrichtung eines Fahrerassistenzsystems wie z.B. Hillholder empfangen, welches dann die Zustände "Parken" bzw. "Fahren" in der elektro-pneumatischen Parkbremssteuereinrichtung 1 herbeiführt, unabhängig von den Parkbremssteuersignalen des Feststellbremssignalgebers 36.

Der Anschluss 66 ist über eine Druckleitung 120 an einen pneumatischen Steuereingang 122 eines Anhängersteuermoduls 124 angeschlossen. Das Anhängersteuermodul 124 ist über Druckleitungen 126 mit einem Kupplungskopf "Bremse" 128 und einem Kupplungskopf "Vorrat" 130 verbunden, an welche korrespondierende Kupplungen von zu einem Anhänger führenden Druckleitungen anschließbar sind.

Das Anhängersteuermodul 124 invertiert in bekannter Weise den an seinem pneumatischen Steuereingang 122 anstehenden Druck, d.h., wird der pneumatische Steuereingang 122 belüftet, so entlüftet das Anhängersteuermodul 124 den Kupplungskopf "Bremse" 128, um die Anhängerbremsen zu lösen und wenn der pneumatische Steuereingang 122 entlüftet wird, so belüftet das Anhängersteuermodul 124 den Kupplungskopf "Bremse" 128, um die Anhängerbremsen zuzuspannen.

Weiterhin ist eine Ventileinrichtung vorgesehen, welche hier durch ein von der elektronischen Steuereinrichtung 14 gesteuertes elektromagnetisches Ventil, hier beispielsweise ein 3/2-Wege-Magnetventil 132 gebildet wird. Das 3/2-Wege-Magnetventil 132 weist einen zweiten, mit dem Druckluftvorrat 110 in Verbindung stehenden Vorratsanschluss 134, eine zweite Entlüftung 136 sowie einen zweiten Arbeitsausgang 138 auf. Das 3/2-Wege-Magnetventil 132 verbindet bedingt durch Federvorspannung stromlos den zweiten Arbeitsausgang 138 mit der zweiten Entlüftung 136 und diesen bestromt gegen die Wirkung der Federvorspannung den mit dem zweiten Vorratsanschluss 134.

Die vorzugsweise in ein Gehäuse der elektro-pneumatischen Parkbremssteuereinrichtung 1 integrierte elektronische Steuereinrichtung 14, welche hier neben der elektropneumatischen Parkbremssteuereinrichtung 1 auch das 3/2-Wege-Magnetventil 132 steuern soll und deshalb mit diesem durch eine elektrische Steuerleitung 140 verbunden ist, ist ausgebildet, dass sie den zweiten Arbeitsausgang 138 des 3/2-Wege-Magnetventils 132 mittels Bestromen des 3/2-Wege-Magnetventils 132 mit dem zweiten Vorratsanschluss 134 und mittels Entstromen des 3/2-Wege-Magnetventils132 mit der zweiten Entlüftung 136 verbindet. Alternativ könnte das 3/2-Wege-Magnetventil 132 auch durch eine eigene, von der elektronischen Steuereinrichtung 14 separate Steuereinrichtung gesteuert werden.

Bei der in Fig.31 gezeigten Ausführungsform ist beispielsweise lediglich ein einziger Druckluftvorrat 110 vorhanden, der beide Vorratsanschlüsse, d.h. den ersten Vorratsanschluss 2 der elektro-pneumatischen Parkbremssteuereinrichtung 1 sowie den zweiten Vorratsanschluss 134 des 3/2-Wege-Magnetventils 132 über eine Vorratsleitung 142 mit Druckluft versorgt. Der Druckluftvorrat 110 ist ebenfalls am Rahmen 116 des Zugfahrzeugs 170 angeordnet.

Fig.31 zeigt auch zwei passive Federspeicherbremszylinder 112, welche als Bestandteile von Kombizylindern aus Betriebsbremszylinder und Federspeicherbremszylinder bevorzugt an der Hinterachse des Zugfahrzeugs 170 angeordnet sind und belüftet die Federspeicherbremszylinder 112, um die Parkbremse zu lösen und entlüftet sie, um die Parkbremse zuspannen.

Weiterhin sind hier beispielsweise zwei Wechselventile 144 vorhanden, von welchen jeweils ein erster Eingang 146 über eine Druckleitung 148 mit dem ersten Arbeitsausgang 28 bzw. dem Anschluss 40 der elektro-pneumatischen Parkbremssteuereinrichtung 1, ein zweiter Eingang 150 über eine Druckleitung 152 mit dem zweiten Arbeitsausgang 138 des 3/2-Wege-Magnetventils 132 und ein Ausgang 154 über eine Druckleitung 156 mit dem jeweils zugeordneten Federspeicherbremszylinder 112 in Verbindung steht und welche jeweils den größeren der an ihren beiden Eingängen 146 bzw. 150 anstehenden Drücke an ihren Ausgang 154 steuern.

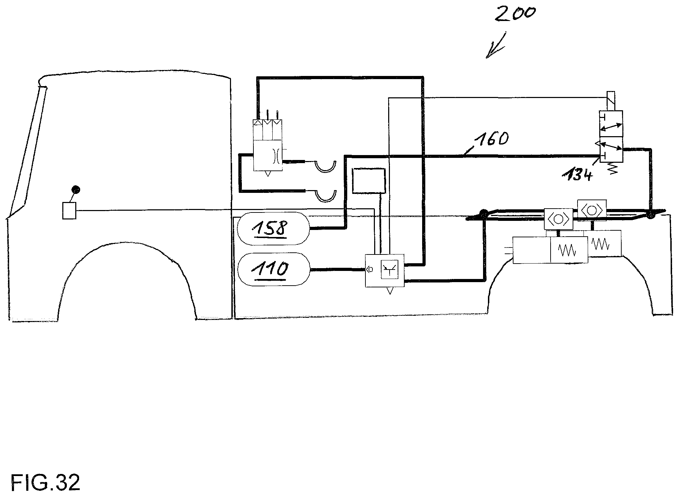

Die elektro-pneumatische Parkbremseinrichtung 200 nach **Fig.32** unterscheidet sich von der nach Fig.31 lediglich darin, dass die elektro-pneumatische Parkbremssteuereinrichtung 1 von einem ersten Druckluftvorrat 110 und das 3/2-Wege-Magnetventil von einem zweiten Druckluftvorrat 158 jeweils über eine eigene Vorratsleitung 142, 160 druckluftversorgt sind. Folglich sind die elektro-pneumatische Parkbremssteuereinrichtung 1 und das 3/2-Wege-Magnetventil 132 in Bezug auf ihre Druckluftversorgung durch die Druckluftvorräte 110, 158 voneinander vollständig entkoppelt bzw. unabhängig voneinander. Damit sind auch voneinander unabhängige elektro-pneumatische Parkbremskreise vorhanden, wobei ein erster elektro-pneumatischer Parkbremskreis den ersten Druckluftvorrat 110 und die elektropneumatische Parkbremssteuereinrichtung 1 sowie zugehörige Leitungen bis zu den Wechselventilen 144 und ein zweiter elektropneumatischer Parkbremskreis den zweiten Druckluftvorrat 158, das 3/2-Wege-Magentventil 132 sowie zugehörige Leitungen bis zu den Wechselventilen 144 umfasst. Die Federspeicherbremszylinder 112 können dann durch beide elektro-pneumatische Parkbremskreise unabhängig betätigt werden. Dies hat positive Konsequenzen im Hinblick auf pneumatische Undichtigkeiten und Lecks bzw. Störungen in der Elektrik/Elektronik und Fehler in den elektropneumatischen Parkbremskreisen, weil dann die Federspeicherbremszylinder 112 noch durch den jeweils noch intakten elektropneumatischen Parkbremskreis betätigt werden können, wie später noch detailliert beschrieben wird. Diese Redundanz ist aber auch mit Ausnahme der Druckluftversorgung bei der Ausführungsform von Fig.31 vorhanden.

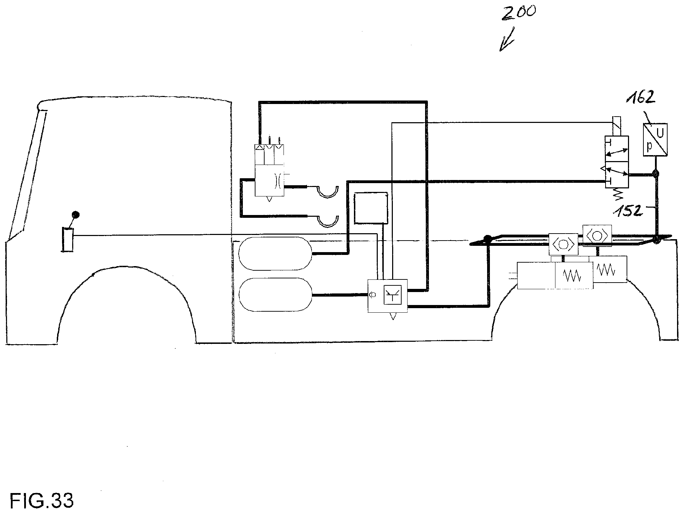

Die elektro-pneumatische Parkbremseinrichtung 200 nach **Fig.33** unterscheidet sich von der nach Fig.32 darin, dass in der Druckleitung 152 zwischen dem zweiten Arbeitsausgang 138 des 3/2-Wege-Magnetventils 132 und den beiden zweiten Eingängen 150 der Wechselventile 144 ein Drucksensor angeordnet ist. Dann können je nach der von der elektronischen Steuereinrichtung 14 bestimmten Schaltstellung des 3/2-Wege-Magnetventils 132 Fehler in Druckluftverbindungen, Verrohrungen und/oder im zweiten Druckluftvorrat 158 erkannt werden.

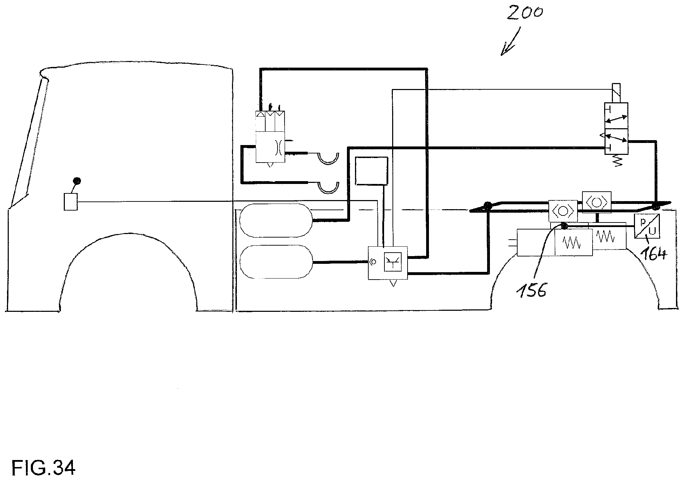

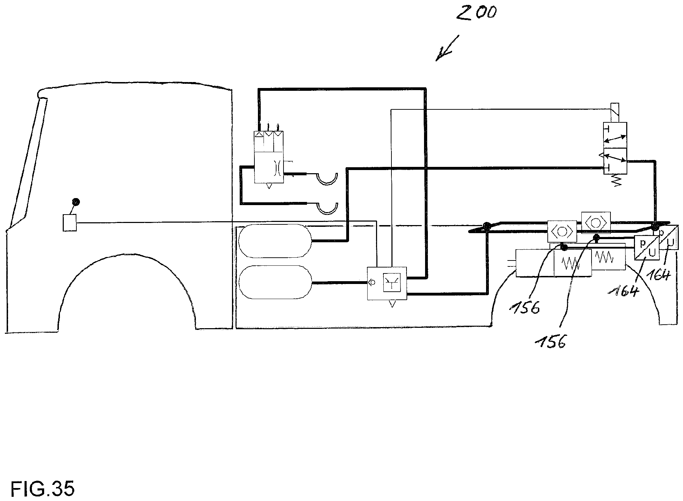

Die elektro-pneumatische Parkbremseinrichtung 200 nach **Fig.34** unterscheidet sich von der nach Fig.33 darin, dass in beispielsweise einer Druckleitung 156 zwischen einem Ausgang 154 eines Wechselventils 144 und dem zugeordneten Federspeicherbremszylinder 112 ein Drucksensor 164 angeordnet ist. Bei der elektro-pneumatische Parkbremseinrichtung 200 nach **Fig.35** sind in jeder Druckleitung 156 zwischen einem Ausgang 154 jedes Wechselventils 144 und dem zugeordneten Federspeicherbremszylinder 112 ein Drucksensor 164 angeordnet. Damit kann auch die Funktion des jeweils an den Drucksensor 164 angeschlossenen Wechselventils 144 überprüft werden. Weiterhin kann durch einen Vergleich der beiden Druckwerte eine Plausibilisierung durchgeführt and anhand dessen Fehler detektiert werden.

Schließlich ist eine Sensoreinrichtung 166 vorhanden, welche den Bewegungszustand des Zugfahrzeugs 170 bzw. der Zugfahrzeug-Anhängerkombination sowie den gerade vorliegenden stabilen Zustand (z.B. "Parken" oder "Fahren") der elektro-pneumatischen Parkbremssteuereinrichtung 1 erfasst und ein den gerade vorliegenden Bewegungszustand des Zugfahrzeugs 170 repräsentierendes Bewegungssignal und ein den gerade vorliegenden stabilen Zustand (z.B. "Parken" oder "Fahren") der elektro-pneumatischen Parkbremssteuereinrichtung 1 repräsentierendes Zustandssignal über eine Signalleitung 168 in die elektronische Steuereinrichtung 14 einsteuert. Die Sensoreinrichtung 166 ist hier bevorzugt aus Anschaulichkeitsgründen außerhalb des Gehäuses der elektro-pneumatischen Parkbremssteuereinrichtung 1 angeordnet. In der Realität ist zumindest ein Teil der Sensoreinrichtung 166 innerhalb des Gehäuses der elektropneumatischen Parkbremssteuereinrichtung 1 untergerbracht.

Diese Sensoreinrichtung 166 kann beispielsweise einen Geschwindigkeitssensor beinhalten, welcher das Bewegungssignal erzeugt. Alternativ kann das Bewegungssignal auch auf der Basis der gemessenen Motordrehzahl und der gerade vorliegenden Getriebestufe ermittelt und in die Steuereinrichtung 14 z.B. über einen Fahrzeugdatenbus eingesteuert werden, an welchen das Motorsteuergerät angeschlossen ist. Das Zustandssignal kann beispielsweise über die Schaltstellungen der elektromagnetischen Ventile 10, 12 bzw. 68, 104, 106 der elektro-pneumatischen Parkbremssteuereinrichtung 1 oder auch anhand des gemessenen Druckwerts am ersten Arbeitsausgang 28 gewonnen werden.

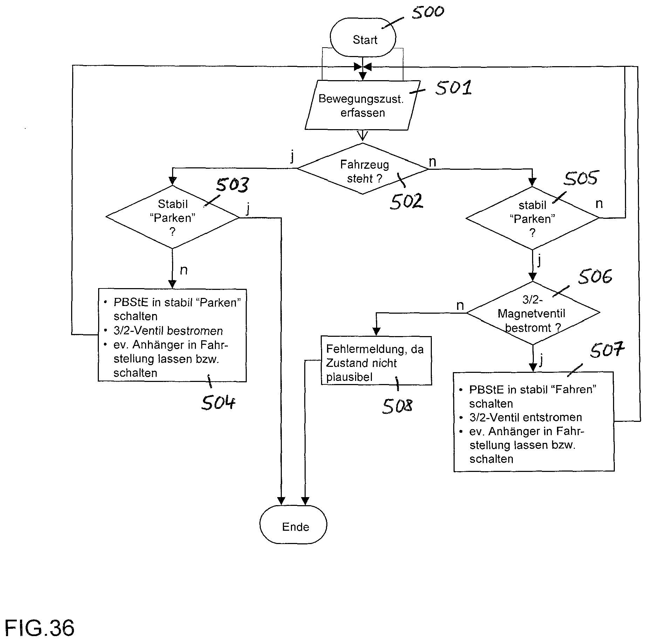

**Fig.36** zeigt einen Ablaufplan eines Verfahrens zur Steuerung einer elektropneumatischen Parkbremseinrichtung 200 gemäß einer der Ausführungen von Fig.31 bis Fig.35. Beispielsweise die elektronische Steuereinrichtung 14 der elektropneumatischen Parkbremssteuereinrichtung 1 ist ausgebildet, dass sie die elektropneumatische Parkbremseinrichtung 200 nach einem nachfolgend beschriebenen Verfahren steuert. Alternativ könnte auch eine zusätzliche Steuereinrichtung hierfür vorgesehen sein.

Nach einem Start des Verfahrens beim Schritt 500 wird im Schritt 501 der Fahrzustand mittels der Sensoreinrichtung 166 erfasst und dann im nachfolgenden Schritt 502 das von der Sensoreinrichtung 166 erzeugte Bewegungssignal dahin gehend ausgewertet, ob das Zugfahrzeug 170 bzw. die Zugfahrzeug-Anhängerkombination (Zuvor bzw. im Folgenden auch: Fahrzeug) sich im Stillstand oder annähernd im Stillstand befindet oder ob es bzw. sie fährt. "Annähernd im Stillstand" soll dabei bedeuten, dass die Fahrgeschwindigkeit kleiner als eine sehr niedrige Fahrgeschwindigkeit ist, z.B. 3 km/h.

Falls in Schritt 502 festgestellt wird, dass das Fahrzeug 170 sich im Stillstand oder annähernd im Stillstand befindet, wird in Schritt 503 das Zustandssignal ("Parken" oder "Fahren") ausgewertet. Falls bei der elektro-pneumatischen Parkbremssteuereinrichtung 1 der stabile Zustand "Parken" vorliegt wird das Verfahren beendet, weil dann bereits der stabile Zustand "Parken" vorliegt.

Falls aber in Schritt 503 festgestellt wird, dass nicht der stabile Zustand "Parken" sondern z.B. der stabile Zustand "Fahren" vorliegt, dann wird in Schritt 504 die elektropneumatische Parkbremssteuereinrichtung 1 von der Steuereinrichtung 14 in den stabilen Zustand "Parken" gesteuert und zugleich das 3/2-Wege-Magnetventil 132 bestromt, welches daraufhin in seine Belüftungsstellung schaltet.

Dadurch werden in den Figuren 31 bis 35 die ersten Eingänge 146 der Wechselventile 144 entlüftet und deren zweite Eingänge 150 belüftet und somit auch deren Ausgänge 154 belüftet. Dadurch bleiben die Federspeicherbremszylinder 112 belüftet und die Parkbremse gelöst. Dies entspricht eigentlich nach wie vor dem Zustand "Fahren", obwohl an der elektro-pneumatische Parkbremssteuereinrichtung 1 bereits der Zustand "Parken" eingestellt wurde.

Wenn nun ein Stromausfall stattfindet oder der Batteriehauptschalter die elektrische Energieversorgung von der Steuereinrichtung 14 abtrennt ("Zündung aus") oder wenn etwa die elektronische Steuereinrichtung 14 einen Fehler aufweist oder ein anderweitiger elektrischer Fehler auftritt, so wird das 3/2-Wege-Magnetventil 132 entstromt und schaltet federvorgespannt automatisch in seine Entlüftungsstellung, so dass die zweiten Eingänge 150 und damit auch die Ausgänge 154 der Wechselventile 144 entlüftet werden. Dadurch werden die Federspeicherbremszylinder 112 entlüftet und die Parkbremse folglich zugespannt. Dies ist im Allgemeinen der sichere Zustand für ein stehendes Fahrzeug. Dadurch wird zuverlässig verhindert, dass bei einer der oben aufgeführten Fehlfunktionen die Parkbremse nicht mehr zugespannt werden kann.

Falls in Schritt 502 festgestellt wird, dass das Fahrzeug 170 fährt, wird in Schritt 505 das Zustandssignal ("Parken" oder "Fahren") ausgewertet und falls nicht der stabile Zustand "Parken" in der elektro-pneumatische Parkbremssteuereinrichtung 1 vorliegt oder eingestellt wurde, so ist dies konsistent, weil das Fahrzeug 170 ja fährt. Folglich wird mit Schritt 500 fortgefahren, d.h. das Verfahren beginnt von Neuem.

Falls aber in Schritt 505 festgestellt wird, dass in der elektro-pneumatische Parkbremssteuereinrichtung 1 der stabile Zustand "Parken" vorliegt bzw. eingestellt wurde, wird im nachfolgenden Schritt 506 erfasst bzw. abgefragt, ob das 3/2-Wege-Magnetventil 132 bestromt ist oder nicht.

Falls das 3/2-Wege-Magnetventil 132 bestromt ist, so wird im nachfolgenden Schritt 507 die elektro-pneumatische Parkbremssteuereinrichtung 1 in den stabilen Zustand "Fahren" gesteuert. Infolgedessen sind dann die ersten Eingänge 146 wie auch die zweiten Eingänge 150 der Wechselventile 144 belüftet, so dass die Federspeicherbremszylinder 112 ebenfalls belüftet sind und die Parkbremse gelöst ist. Optional kann danach das 3/2-Wege-Magnetventil 132 entstromt werden, um den Stromverbrauch und den Verschleiß zu senken.

Falls im Schritt 506 festgestellt wird, dass das 3/2-Wege-Magnetventil 132 nicht bestromt ist, so wird im nachfolgenden Schritt 508 bevorzugt eine Fehlermeldung erzeugt, weil dieser Zustand nicht plausibel ist, woraufhin das Verfahren endet.

Zusammenfassend wird daher die elektro-pneumatische Parkbremssteuereinrichtung 1 bei jedem Stillstand oder annäherndem Stillstand des Fahrzeugs 170 in den stabilen Zustand "Parken" geschaltet bzw. gestellt und gleichzeitig das 3/2-Wege-Magnetventil 132 bestromt. Da nun am Eingang 150 der Wechselventile 144 Vorratsdruck aus einem Druckluftvorrat 110 bzw. 158 ansteht, bleiben die Federspeicherbremszylinder 112 zunächst weiterhin belüftet und somit gelöst. Es wird daher nur das geringe Luftvolumen innerhalb der elektro-pneumatischen Parkbremssteuereinrichtung 1 und innerhalb der Leitungen bzw. Verrohrungen zu den Wechselventilen 144 entlüftet. Dadurch wird der Luftverbrauch reduziert.

Fällt jedoch die elektrische Energieversorgung in dieser Situation aus oder wird sie abgeschaltet, z.B. durch einen Batteriehauptschalter, so schaltet sich das 3/2-Wege-Magnetventil 132 unbestromt und federbelastet automatisch in seine Entlüftungsstellung, in welcher der zweite Arbeitsausgang 138 mit der zweiten Entlüftung 136 verbunden wird, so dass auch die zweiten Eingänge 150 der Wechselventile 144 und damit auch die Federspeicher 112 entlüftet werden.

Darüber hinaus wird auch eine eventuell aktivierte Testfunktion der elektropneumatischen Parkbremssteuereinrichtung 1, bei welcher getestet wird, ob das über die Federspeicherbremszylinder 112 eingebremste Zugfahrzeug 170 die Zugfahrzeug-Anhängerkombination mit ungebremstem Anhänger im Stillstand halten kann, ohne elektrische Energieversorgung automatisch deaktiviert.

Fährt das Fahrzeug 170 wieder an, so wird die elektro-pneumatische Parkbremssteuereinrichtung 1 in den stabilen Zustand "Fahren" geschaltet, was für ein fahrendes Fahrzeug der sichere Zustand der Parkbremse ist.

Um das Fahrzeug mittels des Feststellbremssignalgebers 36 manuell oder durch Anforderung von einem anderen Steuergerät aus dauerhaft zu parken oder die Parkbremse zu lösen, kann das Verfahren nach Fig. 36 von anderen Funktionen innerhalb der Parkbremssteuerung übersteuert und so das Verhalten der elektro-pneumatischen Parkbremssteuereinrichtung 1 und des 3/2-Wege-Magnetventil beeinflusst werden. So kann beispielsweise eine Betätigung des Feststellbremssignalgebers durch den Fahrer in eine Postion "Parkbremse vollständig einlegen" bewirken, dass die elektropneumatische Parkbremssteuereinrichtung 1 in den stabilen Zustand "Parken" geschaltet, bzw. belassen wird und das 3/2-Wege-Magnetventil 132 entstromt wird bzw. bleibt.

Genauso kann beispielsweise eine Betätigung des Feststellbremssignalgebers durch den Fahrer in eine Postion "Parkbremse Lösen" bewirken, dass die elektropneumatische Parkbremssteuereinrichtung 1 in den stabilen Zustand "Fahren" geschaltet, bzw. belassen wird.

Des Weiteren kann das Verfahren nach Fig. 36 auch vollständig deaktivierbar sein.

Tritt im stabilen Zustand "Fahren" ein Leck in oder ein Bruch der Druckleitung 148 zwischen dem ersten Arbeitsausgang 28 der elektro-pneumatischen Parkbremssteuereinrichtung 1 bzw. dem Anschluss 40 und den ersten Eingängen 146 der Wechselventile 144 auf, so werden die ersten Eingänge 146 der Wechselventile 144 entlüftet. Dann kann ein bestromtes und damit in seiner Belüftungsstellung befindliches 3/2-Wege-Magnetventil 132 dafür sorgen, dass die zweiten Eingänge 150 der Wechselventile 144 und damit auch deren Ausgänge 154 belüftet bleiben. Infolgedessen wird zuverlässig verhindert, dass die Federspeicherbremszylinder 112 während der Fahrt aufgrund eines solchen Lecks unbeabsichtigt zuspannen.

Um diese Rohrbruchsicherungsfunktion auszuführen, ergeben sich für die Steuerung der Ventileinrichtung bzw. des 3/2-Wege-Magnetventils 132 grundsätzlich zwei Möglichkeiten: Entweder die Ventileinrichtung bzw. das 3/2-Wege-Magnetventil 132 ist grundsätzlich entstromt und wird von der elektronischen Steuereinrichtung 14 nur bestromt, wenn dies gemäß dem oben beschriebenen Verfahren geboten ist. Dies bringt den Vorteil einer geringeren Erwärmung und eines geringen Verschleißes mit sich. Alternativ wird die Ventileinrichtung bzw. das 3/2-Wege-Magnetventil 132 grundsätzlich in dem Zustand "Fahren" von der elektronischen Steuereinrichtung 14 stets bestromt, um in seine Belüftungsstellung zu schalten und im Zustand "Parken" stets entstromt, um in seine Entlüftungsstellung zu schalten. Zusätzlich erfolgt ein Schalten dieses Ventils 132 selbstverständlich dann, wenn es durch das oben beschriebene Verfahren nach Fig.36 geboten ist.

Bevorzugt wird das 3/2-Wege-Magnetventil 132 durch ein Ventil gebildet, welches in einer Antriebsschlupfregelung (ASR) einer elektro-pneumatischen Betriebsbremse verwendet wird und daher auch als ASR-Ventil bezeichnet werden kann. Dadurch wird ein in hoher Stückzahl gefertigtes Ventil verwendet, wodurch sich niedrige Kosten ergeben. Weiterhin bevorzugt wird das 3/2-Wege-Magnetventil 132 pulsweitenmoduliert oder mehrstufig pulsweitenmoduliert gesteuert, um eine Überhitzung zu vermeiden.

Besonders bevorzugt können auch die elektro-pneumatische Parkbremssteuereinrichtung 1 und/oder die elektronische Steuereinrichtung 14 und/oder das 3/2-Wege-Magnetventil 132 zusammen in einer Baueinheit mit eigenem Gehäuse integriert sein, welche dann ein Parkbremsmodul bildet.

Alternativ kann das 3/2-Wege-Magnetventil 132 auch separat von der elektropneumatischen Parkbremssteuereinrichtung 1 und in unmittelbarer Nähe der Federspeicherbremszylinder 112 an der Hinterachse angeordnet sein.

Die stabilen Zustände "Parken" und "Fahren" der elektro-pneumatischen Parkbremssteuereinrichtung 1 werden hier zwar bevorzugt durch ein rückgekoppeltes Relaisventil 18 in der elektro-pneumatischen Parkbremssteuereinrichtung 1 hergestellt. Alternativ können diese stabilen Zustände aber auch z.B. durch ein bistabiles Magnetventil oder ein bistabiles pneumatisches Ventil in der elektro-pneumatischen Parkbremssteuereinrichtung 1 hergestellt werden.

Wie oben bereits zu den Ausführungsformen von Fig.10 bis Fig.23 oder Fig.26 bis Fig.35 erläutert, weist die elektro-pneumatische Parkbremssteuereinrichtung 1 eine von der elektronischen Steuereinrichtung 14 gesteuerte Magnetventile 68, 104, 106 und einen mit dieser verbundenen Anschluss 66 für das Anhängersteuermodul 124 auf, welcher mit dem pneumatischen Steuereingang 122 des Anhängersteuermoduls 124 verbunden ist.

Dabei die elektronische Steuereinrichtung 14 die Magnetventile 68, 104, 106 as derart, dass der Anschluss 66 für das Anhängersteuermodul 124 im Zustand "Fahren" belüftet und im Zustand "Parken" belüftet oder entlüftet wird. Handelt es sich um ein Fahrzeug 170 mit "Scandinavian Parkbrake", d.h. dass der Anhänger bei zugespannten Federspeicherbremszylindern des Zugfahrzeugs 170 nicht gebremst wird, muss dazu keine Aktion ausgeführt werden. Bei einer "European Parkbrake", d.h. dass der Anhänger bei zugespannten Federspeicherbremszylindern 112 des Zugfahrzeugs 170 mit eingebremst wird, wird dann die "Testfunktion" aktiviert, mit welcher der Fahrer testen kann, ob die Federspeicherbremszylinder 112 des Zugfahrzeugs 170 alleine die Zugfahrzeug-Anhängerkombination sicher eingebremst halten können.

BEZUGSZEICHENLISTE

| | |
|---|---|
| 1 | Parkbremssteuereinrichtung |
| 2 | erster Vorratsanschluss |
| 4 | Rückschlagventil |
| 6 | Vorratsleitung |
| 8 | erste Magnetventileinrichtung |
| 10 | erstes 2/2-Wegemagnetventil |
| 12 | zweites 2/2-Wegemagnetventil |
| 14 | Steuereinrichtung |
| 16 | Vorratseingang |
| 18 | Relaisventil |
| 20 | Steuereingang |
| 22 | Steuerleitung |
| 24 | Drucksenke |
| 26 | Rückkopplungsleitung |
| 28 | erster Arbeitsausgang |
| 30 | Drosselement |
| 32 | Feststellbremssignalanschluss |
| 34 | Signalleitung |
| 36 | Feststellbremssignalgeber |
| 38 | Arbeitsleitung |
| 40 | Anschluss für Federspeicherbremszylinder |
| 42 | Steuerkammer |
| 44 | Gehäuse |
| 46 | Relaiskolben |
| 48 | Ventilkörper |
| 50 | Auslasssitz |
| 52 | Manschette |
| 54 | Einlasssitz |
| 56 | Entlüftung |
| 58 | Arbeitskammer |
| 60 | Vorratskammer |
| 62 | Manschettenfeder |
| 64 | Relaiskolbenfeder |
| 65 | weiteres Drosselement |
| 66 | Anschluss für Anhängersteuerventil |
| 67 | Relaiskolbendichtung |
| 68 | zweite Magnetventileinrichtung |
| 70 | Wechselventil |
| 72 | a/b Ventil |
| 73 | elektrische Energiequelle |
| 74 | dritte Ventileinrichtung |
| 75 | Schalter |
| 78 | 1. Einlass |
| 80 | 2. Einlass |
| 82 | Auslass |
| 84 | Drucksenke |
| 86 | Betätigungsorgan |
| 88 | erster Drucksensor |
| 89 | zweiter Drucksensor |
| 90 | weiterer Drucksensor |
| 92 | Baueinheit |
| 94 | Anschluss |
| 96 | Gehäuse |
| 98 | Anschluss |

| 100 | Signalleitung |
| 102 | vierte Magnetventileinrichtung |
| 104 | viertes 2/2-Wegemagnetventil |
| 106 | fünftes 2/2-Wegemagnetventil |
| 108 | Drucksenke |
| 110 | erster Druckluftvorrat |
| 112 | Federspeicherbremszylinder |
| 114 | Kabine |
| 116 | Rahmen |
| 118 | Signalleitung |
| 120 | Druckleitung |
| 122 | Steuereingang |
| 124 | Anhängersteuermodul |
| 126 | Druckleitung |
| 128 | Kupplungskopf "Bremse" |
| 130 | Kupplungskopf "Vorrat" |
| 132 | 3/2-Wege-Magnetventil |
| 134 | zweiter Vorratsanschluss |
| 136 | zweite Entlüftung |
| 138 | zweiter Arbeitsausgang |
| 140 | Steuerleitung |
| 142 | Vorratsleitung |
| 144 | Wechselventile |
| 146 | erster Eingang |
| 148 | Druckleitung |
| 150 | zweiter Eingang |
| 152 | Druckleitung |
| 154 | Ausgang |
| 156 | Druckleitung |
| 158 | zweiter Druckluftvorrat |
| 160 | Vorratsleitung |
| 162 | Drucksensor |
| 164 | Drucksensor |
| 166 | Sensoreinrichtung |
| 168 | Signalleitung |
| 170 | Fahrzeug |
| 200 | Parkbremseinrichtung |

## Patentansprüche

1. Elektro-pneumatische Parkbremseinrichtung (200) eines Fahrzeugs (170), insbesondere eines Zugfahrzeugs einer Zugfahrzeug-Anhängerkombination, welche wenigstens Folgendes umfasst:

> a) Eine elektronische Steuereinrichtung (14),
> b) wenigstens einen Druckluftvorrat (110, 158),
> c) eine elektro-pneumatische Parkbremssteuereinrichtung (1), welche wenigstens ein von der elektronischen Steuereinrichtung (14) gesteuertes elektromagnetisches Ventil (10, 12, 68, 104, 106), einen ersten, mit wenigstens einem Druckluftvorrat (110) in Verbindung stehenden Vorratsanschluss (2), eine erste Entlüftung (56) sowie einen ersten Arbeitsausgang (28) aufweist und welche als Zustände wenigstens den Zustand "Fahren" und den Zustand "Parken" einnehmen kann, wobei der erste Arbeitsausgang (28) in dem Zustand "Fahren" von dem Druckluftbehälter (110) belüftet und in dem Zustand "Parken" entlüftet ist,
> d) eine Ventileinrichtung (132), welche wenigstens ein von der elektronischen Steuereinrichtung (14) gesteuertes elektromagnetisches Ventil, einen zweiten, mit dem wenigstens einen Druckluftvorrat (158) in Verbindung stehenden Vorratsanschluss (134), eine zweite Entlüftung (136) sowie einen zweiten Arbeitsausgang (138) aufweist, wobei die elektronische Steuereinrichtung (14) ausgebildet ist, dass sie den zweiten Arbeitsausgang (138)

> > d1) mittels Bestromen des wenigstens einen elektromagnetischen Ventils (132) mit dem zweiten Vorratsanschluss (134), und

d2) mittels Entstromen des wenigstens einen elektromagnetischen Ventils (132) mit der zweiten Entlüftung (136) verbindet,

e) wenigstens einen passiven Federspeicherbremszylinder (112), welcher belüftet die Parkbremse löst und entlüftet zuspannt,

f) wenigstens ein Wechselventil (144), von welchem ein erster Eingang (146) mit dem ersten Arbeitsausgang (28), ein zweiter Eingang (150) mit dem zweiten Arbeitsausgang (138) und ein Ausgang (154) mit dem wenigstens einen Federspeicherbremszylinder (112) in Verbindung steht und welche den größeren der an seinen beiden Eingängen anstehenden Drücke an seinen Ausgang (154) steuert,

**dadurch gekennzeichnet, dass**

g) die elektro-pneumatische Parkbremssteuereinrichtung (1) bistabil ausgebildet ist und wenigstens den Zustand "Fahren" und den Zustand "Parken" als stabile Zustände aufweist,

h) eine Sensoreinrichtung (166) vorgesehen ist, welche den Bewegungszustand des Fahrzeugs (170) und den gerade vorliegenden stabilen Zustand der elektropneumatischen Parkbremssteuereinrichtung (1) erfasst und ein den gerade vorliegenden Bewegungszustand des Fahrzeugs (170) repräsentierendes Bewegungssignal und ein den gerade vorliegenden stabilen Zustand der elektropneumatischen Parkbremssteuereinrichtung (1) repräsentierendes Zustandssignal in die elektronische Steuereinrichtung (14) einsteuert, wobei

i) die elektronische Steuereinrichtung (14) weiterhin derart ausgebildet ist, dass sie wenigstens die folgenden Schritte ausführt:

j) Auswerten des Bewegungssignals dahingehend, ob das Fahrzeug (170) sich im Stillstand oder annähernd im Stillstand befindet oder ob es fährt, und falls

k1) das Fahrzeug (170) sich im Stillstand oder annähernd im Stillstand befindet Auswerten des Zustandssignals und falls

k12) der stabile Zustand "Parken" vorliegt Beenden des Verfahrens, falls aber

k22) nicht der stabile Zustand "Parken" vorliegt Steuern der elektropneumatischen Parkbremssteuereinrichtung (1) in den stabilen Zustand "Parken" und Bestromen des wenigstens einen elektromagnetischen Ventils (132),

oder falls

k2) das Fahrzeug (170) fährt Auswerten des Zustandssignals und falls

k21) nicht der stabile Zustand "Parken" vorliegt Fortfahren mit Schritt j), aber falls

k22) der stabile Zustand "Parken" vorliegt Erfassen, ob das wenigstens eine elektromagnetische Ventil (132) bestromt ist, und falls das wenigstens eine elektromagnetische Ventil (132) bestromt ist, Steuern der elektropneumatischen Parkbremssteuereinrichtung (1) in den stabilen Zustand "Fahren" .

2. Elektro-pneumatische Parkbremseinrichtung nach Anspruch 1, **dadurch gekennzeichnet, dass** der zweite Vorratsanschluss (134) der Ventileinrichtung (132) mit einem ersten Druckluftvorrat (110) verbunden ist, mit welchem auch der erste Vorratsanschluss (2) der elektro-pneumatischen Parkbremssteuereinrichtung (1) verbunden ist oder mit einem in Bezug zum ersten Druckluftvorrat (110) separaten zweiten Druckluftvorrat (158).

3. Elektro-pneumatische Parkbremseinrichtung nach Anspruch 1 oder 2, **dadurch gekennzeichnet, dass** das elektromagnetische Ventil der Ventileinrichtung (132) durch ein 3/2-Wege-Magnetventil gebildet wird, an welchem der zweite Vorratsanschluss (134), die zweite Entlüftung (136) und der zweite Arbeitsausgang (138) ausgebildet sind und welches stromlos bedingt durch Federvorspannung den zweiten Arbeitsausgang (138) mit der zweiten Entlüftung (136) und bestromt gegen die Wirkung der Federvorspannung den zweiten Arbeitsausgang (138) mit dem zweiten Vorratsanschluss (134) verbindet.

4. Elektro-pneumatische Parkbremseinrichtung nach Anspruch 3, **dadurch gekennzeichnet, dass** das 3/2-Wege-Magnetventil (132) durch ein Ventil gebildet wird, welches in einer Antriebsschlupfregelung (ASR) verwendet wird.

5. Elektro-pneumatische Parkbremseinrichtung nach einem der vorhergehenden Ansprüche, **dadurch gekennzeichnet, dass** das elektromagnetische Ventil (132) pulsweitenmoduliert gesteuert wird.

6. Elektro-pneumatische Parkbremseinrichtung nach einem der vorhergehenden Ansprüche, **dadurch gekennzeichnet, dass** in einer Druckverbindung (152) zwischen dem zweiten Arbeitsausgang (138) der Ventileinrichtung (132)

**EP 3 356 192 B1**

und dem zweiten Eingang (150) des Wechselventils (144) und/oder in einer Druckverbindung (156) zwischen dem Ausgang (154) des Wechselventils (144) und dem wenigstens einen Federspeicherbremszylinder (112) wenigstens ein Drucksensor (162; 164) angeordnet ist, dessen Drucksignale in der elektronischen Steuereinrichtung (14) ausgewertet werden.

7. Elektro-pneumatische Parkbremseinrichtung nach einem der vorhergehenden Ansprüche, **dadurch gekennzeichnet, dass** die elektronische Steuereinrichtung (14) Parkbremssteuersignale wenigstens eines Feststellbremssignalgebers (36) empfängt und abhängig von diesen Parkbremssteuersignalen wenigstens die stabilen Zustände "Fahren" und "Parken" der elektropneumatischen Parkbremssteuereinrichtung (1) einstellt.

8. Elektro-pneumatische Parkbremseinrichtung nach einem der vorhergehenden Ansprüche, **dadurch gekennzeichnet, dass** die elektro-pneumatische Parkbremssteuereinrichtung (1) und/oder die elektronische Steuereinrichtung (14) und/oder die Ventileinrichtung (132) in einer Baueinheit integriert sind.

9. Elektro-pneumatische Parkbremseinrichtung nach einem der vorhergehenden Ansprüche, **dadurch gekennzeichnet, dass** die Ventileinrichtung (132) separat von der elektro-pneumatischen Parkbremssteuereinrichtung (1) und in unmittelbarer Nähe des wenigstens einen Federspeicherbremszylinders (112) angeordnet ist.

10. Elektro-pneumatische Parkbremseinrichtung nach einem der vorhergehenden Ansprüche, **dadurch gekennzeichnet, dass** die stabilen Zustände der elektro-pneumatischen Parkbremssteuereinrichtung (1) durch ein rückgekoppeltes Relaisventil (18) und/oder durch wenigstens ein bistabiles Magnetventil der elektro-pneumatischen Parkbremssteuereinrichtung (1) herstellbar sind.

11. Elektro-pneumatische Parkbremseinrichtung nach einem der vorhergehenden Ansprüche, **dadurch gekennzeichnet, dass** die elektro-pneumatische Parkbremssteuereinrichtung (1) eine von der elektronischen Steuereinrichtung (14) gesteuerte Magnetventileinrichtung (68; 104, 106) und einen mit dieser verbundenen Anschluss (66) für ein Anhängersteuerventil (124) aufweist, welcher mit einem pneumatischen Steuereingang (122) eines Anhängersteuerventils oder eines Anhängersteuermoduls (124) verbunden ist, welches ausgangsseitig mit einem Kupplungskopf "Vorrat" (130) und einem Kupplungskopf "Bremse" (128) verbunden ist.

12. Elektro-pneumatische Parkbremseinrichtung nach Anspruch 11, **dadurch gekennzeichnet, dass** die elektronische Steuereinrichtung (14) das wenigstens eine elektromagnetische Ventil (132) und/oder die Magnetventileinrichtung (68; 104, 106) derart steuert, dass der Anschluss (66) für das Anhängersteuermodul (124) im Zustand "Fahren" belüftet und im Zustand "Parken" belüftet oder entlüftet wird.

13. Zugfahrzeug (170) einer Zugfahrzeug-Anhängerkombination, welches eine elektro-pneumatische Parkbremseinrichtung (200) nach einem der vorhergehenden Ansprüche aufweist.

**Claims**

1. Electropneumatic parking brake device (200) of a vehicle (170), in particular of a tractor vehicle of a tractor vehicle-trailer combination, which parking brake device comprises at least the following:

   a) an electronic control device (14),
   b) at least one compressed-air supply (110, 158),
   c) an electropneumatic parking brake control device (1) which has at least one electromagnetic valve (10, 12, 68, 104, 106) controlled by the electronic control device (14), a first supply port (2) connected to at least one compressed-air supply (110), a first vent (56) and a first working outlet (28), and which, as states, can assume at least the "drive" state and the "park" state, wherein the first working outlet (28) is aerated from the compressed-air vessel (110) in the "drive" state and is vented in the "park" state,
   d) a valve device (132) which has at least one electromagnetic valve controlled by the electronic control device (14), a second supply port (134) connected to the at least one compressed-air supply (158), a second vent (136), and a second working outlet (138), wherein the electronic control device (14) is designed so as to connect the second working outlet (138)

      d1) to the second supply port (134) by electrical energization of the at least one electromagnetic valve (132), and

21

d2) to the second vent (136) by electrical deenergization of the at least one electromagnetic valve (132),

e) at least one passive spring brake cylinder (112) which releases the parking brake when aerated and applies the parking brake when vented,

f) at least one shuttle valve (144), of which a first inlet (146) is connected to the first working outlet (28), a second inlet (150) is connected to the second working outlet (138), and an outlet (154) is connected to the at least one spring brake cylinder (112), and which, at its outlet (154), outputs the higher of the pressures prevailing at its two inlets,

**characterized in that**

g) the electropneumatic parking brake control device (1) is of bistable design and has at least the "drive" state and the "park" state as stable states,

h) a sensor device (166) is provided which detects the movement state of the vehicle (170) and the presently prevailing stable state of the electropneumatic parking brake control device (1) and which inputs into the electronic control device (14) a movement signal, which represents the presently prevailing movement state of the vehicle (170), and a state signal, which represents the presently prevailing stable state of the electropneumatic parking brake control device (1), wherein

i) the electronic control device (14) is furthermore designed to perform at least the following steps:

j) evaluating the movement signal with regard to whether the vehicle (170) is at a standstill or is approximately at a standstill or is driving, and if

k1) the vehicle (170) is at a standstill or is approximately at a standstill, evaluating the state signal and if

k12) the stable "park" state is present, ending the method, but if
k22) the stable "park" state is not present, controlling the electropneumatic parking brake control device (1) into the stable "park" state and electrically energizing the at least one electromagnetic valve (132),

or if
k2) the vehicle (170) is driving, evaluating the state signal and if

k21) the stable "park" state is not present, continuing with step j), but if
k22) the stable "park" state is present, detecting whether the at least one electromagnetic valve (132) is electrically energized, and if the at least one electromagnetic valve (132) is electrically energized, controlling the electropneumatic parking brake device (1) into the stable "drive" state.

2. Electropneumatic parking brake device according to Claim 1, **characterized in that** the second supply port (134) of the valve device (132) is connected to a first compressed-air supply (110), to which the first supply port (2) of the electropneumatic parking brake control device (1) is also connected, or to a second compressed-air supply (158), which is separate from the first compressed-air supply (110).

3. Electropneumatic parking brake device according to Claim 1 or 2, **characterized in that** the electromagnetic valve of the valve device (132) is formed by a 3/2 directional solenoid valve, on which the second supply port (134), the second vent (136) and the second working outlet (138) are formed and which connects the second working outlet (138) to the second vent (136), owing to spring preload, when electrically deenergized and which connects the second working outlet (138) to the second supply port (134) counter to the action of the spring preload when electrically energized.

4. Electropneumatic parking brake device according to Claim 3, **characterized in that** the 3/2 directional solenoid valve (132) is formed by a valve which is used in an acceleration slip regulation (ASR) system.

5. Electropneumatic parking brake device according to one of the preceding claims, **characterized in that** the electromagnetic valve (132) is controlled in pulse-width-modulated fashion.

6. Electropneumatic parking brake device according to one of the preceding claims, **characterized in that** at least one pressure sensor (162; 164), the pressure signals of which are evaluated in the electronic control device (14), is arranged in a pressure connection (152) between the second working outlet (138) of the valve device (132) and the second inlet (150) of the shuttle valve (144) and/or in a pressure connection (156) between the outlet (154) of the shuttle valve (144) and the at least one spring brake cylinder (112).

7. Electropneumatic parking brake device according to one of the preceding claims, **characterized in that** the electronic control device (14) receives parking brake control signals from at least one immobilization brake signal transducer (36) and sets at least the stable states "drive" and "park" of the electropneumatic parking brake control device (1) in a manner dependent on said parking brake control signals.

8. Electropneumatic parking brake device according to one of the preceding claims, **characterized in that** the electropneumatic parking brake control device (1) and/or the electronic control device (14) and/or the valve device (132) are integrated in a structural unit.

9. Electropneumatic parking brake device according to one of the preceding claims, **characterized in that** the valve device (132) is arranged separately from the electropneumatic parking brake control device (1) and in the immediate vicinity of the at least one spring brake cylinder (112).

10. Electropneumatic parking brake device according to one of the preceding claims, **characterized in that** the stable states of the electropneumatic parking brake control device (1) can be produced by means of a relay valve (18) with feedback and/or by means of at least one bistable solenoid valve of the electropneumatic parking brake control device (1).

11. Electropneumatic parking brake device according to one of the preceding claims, **characterized in that** the electropneumatic parking brake control device (1) has a solenoid valve device (68; 104, 106), which is controlled by the electronic control device (14), and has a port (66), connected to said solenoid valve device, for a trailer control valve (124), which port is connected to a pneumatic control inlet (122) of a trailer control valve or of a trailer control module (124) which, at an outlet side, is connected to a "supply" coupling head (130) and to a "brake" coupling head (128).

12. Electropneumatic parking brake device according to Claim 11, **characterized in that** the electronic control device (14) controls the at least one electromagnetic valve (132) and/or the solenoid valve device (68; 104, 106) such that the port (66) of the trailer control module (124) is aerated in the "drive" state and is aerated or vented in the "park" state.

13. Tractor vehicle (170) of a tractor vehicle-trailer combination, which tractor vehicle has an electropneumatic parking brake device (200) according to one of the preceding claims.


**Revendications**

1. Dispositif (200) électropneumatique de frein de stationnement d'un véhicule (170), notamment d'un véhicule tracteur d'une combinaison véhicule tracteur-remorque, qui comprend au moins ce qui suit :

   a) un dispositif (14) électronique de commande,
   b) au moins un réservoir (110, 158) d'air comprimé,
   c) un dispositif (1) électropneumatique de commande de frein de stationnement, qui a au moins une électrovanne (10, 12, 68, 104, 106) commandée par le dispositif (14) électronique de commande, un premier raccord (2) de réservoir, communiquant avec au moins un réservoir (110) d'air comprimé, une première purge (56) ainsi qu'une première sortie (28) de travail et qui peut prendre comme état au moins l'état « circulation » et l'état « stationnement », dans lequel la première sortie (28) de travail est dans l'état « circulation » alimentée par le réservoir (110) d'air comprimé et est purgée dans l'état « stationnement »,
   d) un dispositif (132) de soupape, qui a au moins une électrovanne commandée par le dispositif (14) électronique de commande, un deuxième raccord (134) de réservoir communiquant avec le au moins un réservoir (158) d'air comprimé, une deuxième purge (136), ainsi qu'une deuxième sortie (138) de travail, le dispositif (14) électronique de commande étant constitué de manière à mettre en communication la deuxième sortie (138) de travail

   d1), au moyen d'une alimentation en courant électrique de la au moins une électrovanne (132), avec le deuxième raccord (134) de réservoir et
   d2), en faisant cesser l'alimentation en courant électrique de la au moins une électrovanne (132), avec la deuxième purge (136),

   e) au moins un cylindre (112) de frein à ressort accumulateur passif, qui, alimenté en air, desserre le frein de stationnement, et non alimenté en air, le serre,
   f) au moins une soupape (144) à deux voies, dont une première entrée (146) communique avec la première sortie (28) de travail, une deuxième entrée (150) avec la deuxième sortie (138) de travail et une sortie (154) avec le au moins un cylindre (112) de frein à ressort accumulateur, et qui donne à sa sortie (154) la plus grande des pressions s'appliquant à ses deux entrées,

**caractérisé en ce que**

g) le dispositif (1) électropneumatique de commande de frein de stationnement est constitué de manière bistable et a au moins l'état « circulation » et l'état « stationnement » comme états stables,

h) il est prévu un dispositif (166) formant capteur, qui détecte l'état de déplacement du véhicule (170) et l'état stable précisément présent du dispositif (1) électropneumatique de commande de frein de stationnement et entre, dans le dispositif (14) électronique de commande, un signal de déplacement représentant l'état de déplacement précisément présent du véhicule (170) et un état stable précisément présent du dispositif (1) électropneumatique de commande du frein de stationnement, dans lequel

i) le dispositif (14) électronique de commande est constitué, en outre, de manière à effectuer au moins les stades suivants :

j) exploitation du signal de déplacement sur le point de savoir si le véhicule (170) se trouve à l'arrêt ou presque à l'arrêt ou s'il circule et, si

k1) le véhicule se trouve à l'arrêt ou presque à l'arrêt, exploitation du signal d'état et, si

k12) il y a l'état stable « stationnement », fin du procédé, mais si

k22) il n'y a pas l'état stable « stationnement », mise du dispositif (1) électropneumatique de commande de frein de stationnement dans l'état stable « stationnement » et alimentation en courant électrique de la au moins une électrovanne (132),

ou, si

k2) le véhicule circule, exploitation du signal d'état et, si

k21) il n'y a pas l'état stable mais « stationnement », continuation avec le stade j), mais si

k22) il y a l'état stable « stationnement », détection du point de savoir si la au moins une électrovanne (132) est alimentée en courant électrique et si la au moins une électrovanne (132) est alimentée en courant électrique, mise du dispositif (1) électropneumatique de commande de frein de stationnement dans l'état stable « circulation ».

2. Dispositif de frein de stationnement électropneumatique suivant la revendication 1, **caractérisé en ce que** le deuxième raccord (134) de réservoir du dispositif (132) de soupape communique avec un premier réservoir (11b) d'air comprimé avec lequel le premier raccord (2) de réservoir du dispositif (1) électropneumatique de commande du frein de stationnement communique aussi ou avec un deuxième réservoir (158) d'air comprimé distinct du premier réservoir (110) d'air comprimé.

3. Dispositif de frein de stationnement électropneumatique suivant la revendication 1 ou 2, **caractérise en ce que** l'électrovanne du dispositif (132) de soupape est formée d'une électrovanne à 3/2 voies, sur laquelle sont constitués le deuxième raccord (134) de réservoir, la deuxième purge (136) et la deuxième sortie (138) de travail, et qui, sans courant électrique, en raison d'une précontrainte par ressort, met la deuxième sortie (138) de travail en communication avec la deuxième purge (136) et alimenté en courant met, à l'encontre de l'effet de la précontrainte du ressort, la deuxième sortie (138) de travail en communication avec le deuxième raccord (134) de réservoir.

4. Dispositif de frein de stationnement électropneumatique suivant la revendication 3, **caractérisé en ce que** l'électrovanne (132) à 3/2 voies est formée par une vanne, qui est utilisée dans une régulation du glissement (ASR).

5. Dispositif de frein de stationnement électropneumatique suivant l'une des revendications précédentes, **caractérisé en ce que** l'électrovanne (132) est commandée en modulation d'impulsion en largeur.

6. Dispositif de frein de stationnement électropneumatique suivant l'une des revendications précédentes, **caractérisé en ce que**, dans une liaison (152) de pression entre la deuxième sortie (138) de travail du dispositif (132) de soupape et la deuxième entrée (150) de la soupape (144) à deux voies et/ou dans une liaison (156) de pression entre la sortie (154) de la soupape (144) à deux voies et le au moins un cylindre (112) de frein à ressort accumulateur, est monté au moins un capteur (162, 164) de pression, dont les signaux de pression sont exploités dans le dispositif (14) électronique de commande.

7. Dispositif de frein de stationnement électropneumatique suivant l'une des revendications précédentes, **caractérisé**

**en ce que** le dispositif (14) électronique de commande reçoit des signaux de commande de frein de stationnement d'au moins un transmetteur, (36) de signaux de frein de stationnement et, en fonction de ces signaux de frein de stationnement, établit au moins les états stables « circulation » et « stationnement » du dispositif (1) électropneumatique de commande de frein de stationnement.

8. Dispositif de frein de stationnement électropneumatique suivant l'une des revendications précédentes, **caractérisé en ce que** le dispositif (1) électropneumatique de commande de frein de stationnement et/ou le dispositif (14) électrique de commande et/ou le dispositif (132) de soupape sont intégrés en une unité de construction.

9. Dispositif de frein de stationnement électropneumatique suivant l'une des revendications précédentes, **caractérisé en ce que** le dispositif (132) de soupape est monté séparément du dispositif (1) électropneumatique de commande de frein de stationnement et à proximité immédiate du au moins un ressort (112) de frein à ressort accumulateur.

10. Dispositif de frein de stationnement électropneumatique suivant l'une des revendications précédentes, **caractérisé en ce que** les états stables du dispositif (1) électropneumatique de commande de frein de stationnement peuvent être obtenus par une vanne (18) relais de réaction et/ou par au moins une électrovanne bistable du dispositif (1) électropneumatique de commande de frein de stationnement.

11. Dispositif de frein de stationnement électropneumatique suivant l'une des revendications précédentes, **caractérisé en ce que** le dispositif (1) électropneumatique de commande de frein de stationnement a un dispositif (68 ; 104, 106) d'électrovanne, commandé par le dispositif (14) électronique de commande et, relié à celui-ci, un raccord (66) pour une soupape (124) de commande de remorque, qui communique avec une entrée (122) pneumatique de commande d'une soupape de commande de remorque ou d'un module (124) de commande de remorque, lequel communique, du côté de la sortie, avec une tête d'accouplement « réservoir » (130) et une tête d'accouplement « frein » (128).

12. Dispositif de frein de stationnement électropneumatique suivant la revendication 11, **caractérisé en ce que** le dispositif (14) électronique de commande commande la au moins une électrovanne (132) et/ou le dispositif (68 ; 104, 106) d'électrovanne, de manière à alimenter en air le raccord (66) pour le module (124) de commande de remorque dans l'état « circulation » et à le purger dans l'état « stationnement ».

13. Véhicule (170) tracteur d'une combinaison véhicule tracteur-remorque, qui un dispositif (200) électropneumatique de frein de stationnement suivant l'une des revendications précédentes.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

FIG.20

FIG.21

FIG.22

FIG.23

FIG.24

FIG.25

FIG.26

FIG.27

FIG.28

FIG.29

FIG.30

FIG.31

200

160

134

158

110

FIG.32

200

162

152

FIG.33

**FIG.34**

FIG.35

**500** Start

**501** Bewegungszust. erfassen

**502** Fahrzeug steht ?

j → **503** Stabil "Parken" ?

n → **504**
- PBStE in stabil "Parken" schalten
- 3/2-Ventil bestromen
- ev. Anhänger in Fahrstellung lassen bzw. schalten

j → Ende

n → **505** stabil "Parken" ?

j → **506** 3/2-Magnetventil bestromt ?

n → **508** Fehlermeldung, da Zustand nicht plausibel

j → **507**
- PBStE in stabil "Fahren" schalten
- 3/2-Ventil entstromen
- ev. Anhänger in Fahrstellung lassen bzw. schalten

FIG.36

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006024120 A1
- DE 102011101438 A1
- DE 102009016983 A1
- DE 10247812 C1
- DE 102006055570 B4
- DE 102007061908 B4